# EUROPEAN PATENT APPLICATION

(11) **EP 3 715 013 A1**
(43) Date of publication of application: **30.09.2020**
(21) Application number: 19305412.9
(22) Date of filing: 29.03.2019
(51) Int. Cl.: B22D 11/108, C01B 33/24

(54) **WOLLASTONITE SUBSTITUTE**

(71) Applicant: IMERTECH SAS, 75015 Paris (FR)
(72) Inventor: CHAKRABORTY, Indra Nath, Nagpur 440033 (IN); BANERJI, Abhishek, Saptarshi Park, Dugapur West Bengal 713206 (IN); SARKAR, Bimal Kumar, New Town, Rajarhat Kolkata 700160 (IN)
(74) Representative: Haseltine Lake Kempner LLP

(57) **Abstract**

A method of manufacturing a mineral product for a mould flux for use in metal casting comprises: providing a precursor material comprising hydrated calcium silicate; and calcining the precursor material at a temperature equal to or greater than about 800°C to produce a calcined material comprising calcium silicate.

## Description

### TECHNICAL FIELD

The present invention is directed to mould fluxes for use in metal casting and methods of manufacturing mould fluxes, mineral products for mould fluxes for use in metal casting and methods of manufacturing mineral products, synthetic wollastonite substitutes and methods of manufacturing synthetic wollastonite substitutes, and uses of hydrated calcium silicate in the manufacture of mould fluxes, mineral products for mould fluxes and synthetic wollastonite substitutes.

### BACKGROUND TO THE INVENTION

Wollastonite is a naturally occurring mineral form of calcium inosilicate (CaSiOs). Wollastonite finds industrial applications in ceramics, in paints, in plastics and in metallurgy. For example, wollastonite is added to ceramics to reduce shrinkage and gas evolution during firing and to increase both green and fired strength while maintaining brightness. Wollastonite is added to paints to increase durability and weather-resistance and to mattify paint films. Wollastonite is added to plastics to improve tensile and flexural strength and to increase stability at elevated temperatures. In metallurgy, wollastonite is a common mineral component of mould fluxes for casting metals such as steel.

A mould flux is a material added to a mould during the casting of molten metal. The mould flux is typically a granular material such as a powder. Accordingly, mould fluxes are sometimes referred to as casting powders. Mould fluxes generally form slags when heated by the molten metal. Slags formed by mould fluxes during metal casting typically serve to inhibit oxidation of the molten metal, to reduce heat loss from the molten metal to inhibit premature solidification, to control heat transfer to the mould, to absorb impurities such as non-metallic inclusions present in the molten metal and/or to provide lubrication between the solidified metal shell and the mould. Naturally occurring wollastonite is included in mould fluxes to increase Al₂O₃ absorption, fusibility and thermal insulation qualities, and to reduce viscosity.

However, being a natural resource, wollastonite is becoming scarce and, consequently, expensive. Accordingly, it would be beneficial to provide a synthetic wollastonite substitute. It would also be beneficial to provide mould fluxes, or mineral products for mould fluxes, in which naturally occurring wollastonite is replaced by a substitute material exhibiting similar properties.

### SUMMARY OF THE INVENTION

According to a first aspect, the present invention is directed to a method of manufacturing a mineral product for a mould flux for use in metal casting, the method comprising: providing a precursor material comprising hydrated calcium silicate; and calcining the precursor material at a temperature equal to or greater than about 800°C to produce a calcined material comprising calcium silicate.

According to a second aspect, the present invention is directed to a method of manufacturing a mould flux for use in metal casting, the method comprising: providing a precursor material comprising hydrated calcium silicate; and calcining the precursor material at a temperature equal to or greater than about 800°C to produce a calcined material comprising calcium silicate.

According to a third aspect, the present invention is directed to a method of manufacturing a synthetic wollastonite substitute, the method comprising: providing a precursor material comprising hydrated calcium silicate; and calcining the precursor material at a temperature equal to or greater than about 800°C to produce a calcined material comprising calcium silicate.

According to a fourth aspect, the present invention is directed to a mineral product for a mould flux manufactured according to the method of the first aspect.

According to a fifth aspect, the present invention is directed to a mould flux manufactured according to the method of the second aspect.

According to a sixth aspect, the present invention is directed to a synthetic wollastonite substitute manufactured according to the method of the third aspect.

According to a seventh aspect, the present invention is directed to use of hydrated calcium silicate in the manufacture of a mould flux, or a mineral product for a mould flux, for use in metal casting.

According to an eighth aspect, the present invention is directed to use of hydrated calcium silicate in the manufacture of a synthetic wollastonite substitute.

### FIGURES

Embodiments are described by way of example only, with reference to the Figures, in which:
**Figure 1** is a labelled X-ray Diffraction Pattern for a calcium silicate brick;
**Figure 2** is a labelled X-ray Diffraction Pattern for a calcined calcium silicate brick;
**Figure 3** is a plot of mould flux sample height as a function of temperature measured in a hot stage microscrope;
**Figure 4** a plot of mould flux sample height as a function of temperature measured in a hot stage microscrope; and
**Figure 5** is an experimental plot of furnace temperature as a function of time during an example process of calcining calcium silicate bricks.

### DETAILED DESCRIPTION OF THE INVENTION

It has surprisingly been found that calcining a precursor material comprising hydrated calcium silicate at a temperature equal to or greater than about 800°C leads to the production of a calcined material similar to naturally occurring wollastonite. The calcined material may be used as, or in the production of, a mould flux, a mineral product for a mould flux, or a synthetic wollastonite substitute.

### Precursor material

The precursor material comprises hydrated calcium silicate. The precursor material may be (i.e. consist of) hydrated calcium silicate. The precursor material may consist substantially of hydrated calcium silicate. The precursor material may comprise no less than about 10 wt. %, for example, no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, of hydrated calcium silicate. The precursor material may comprise up to about 100 wt. %, for example, no greater than about 99 wt. %, or no greater than about 95 wt. %, or no greater than about 90 wt. %, or no greater than about 80 wt. %, or no greater than about 70 wt. %, or no greater than about 60 wt. %, or no greater than about 50 wt. %, of hydrated calcium silicate. The precursor material may comprise from about 10 wt. % to about 100 wt. %, for example, from about 10 wt. % to about 99 wt. %, or from about 10 wt. % to about 90 wt. %, or from about 10 wt. % to about 80 wt. %, or from about 10 wt. % to about 70 wt. %, or from about 10 wt. % to about 60 wt. %, or from about 10 wt. % to about 50 wt. %, or from about 20 wt. % to about 100 wt. %, or from about 20 wt. % to about 99 wt. %, or from about 20 wt. % to about 90 wt. %, or from about 20 wt. % to about 80 wt. %, or from about 20 wt. % to about 70 wt. %, or from about 20 wt. % to about 60 wt. %, or from about 20 wt. % to about 50 wt. %, or from about 30 wt. % to about 100 wt. %, or from about 30 wt. % to about 99 wt. %, or from about 30 wt. % to about 90 wt. %, or from about 30 wt. % to about 80 wt. %, or from about 30 wt. % to about 70 wt. %, or from about 30 wt. % to about 60 wt. %, or from about 30 wt. % to about 50 wt. %, or from about 40 wt. % to about 100 wt. %, or from about 40 wt. % to about 99 wt. %, or from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 100 wt. %, or from about 50 wt. % to about 99 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 100 wt. %, or from about 60 wt. % to about 99 wt. %, or from about 60 wt. % to about 90 wt. %, or from about 60 wt. % to about 80 wt. %, or from about 60 wt. % to about 70 wt. %, or from about 70 wt. % to about 100 wt. %, or from about 70 wt. % to about 99 wt. %, or from about 70 wt. % to about 90 wt. %, or from about 70 wt. % to about 80 wt. %, or from about 80 wt. % to about 100 wt. %, or from about 80 wt. % to about 99 wt. %, or from about 80 wt. % to about 90 wt. %, or from about 90 wt. % to about 100 wt. %, or from about 90 wt. % to about 99 wt. %, of hydrated calcium silicate.

It will be appreciated that hydrated calcium silicate may be present in the precursor in the form of a hydrated calcium silicate mineral (i.e. a calcium silicate hydrate mineral). The hydrated calcium silicate present in the precursor material may comprise (e.g. be) hydrated calcium silicate in the form of tobermorite. Tobermorite is a mineral form of hydrated calcium silicate having chemical formula Ca₅Si₆O₁₆(OH)₂·4H₂O. Tobermorite crystallises in the orthorhombic crystal system in the disphenoidal class having space group C222₁. Tobermorite typically has a unit cell defined by a = 11.17 Å, b = 7.38 Å, c = 22.94 Å, β = 90°. The tobermorite may be tobermorite-11 Å or tobermorite-14 Å.

Additionally or alternatively, the hydrated calcium silicate present in the precursor may comprise (e.g. be) hydrated calcium silicate in the form of afwilite (i.e. Ca₃(SiO₃OH)₂·2H₂O crystallising in the monoclinic crystal system, domatic crystal class, with space group Cc), jennite (i.e. Ca₉Si₆O₁₈(OH)₆·8H₂O crystallising in the triclinic crystal system, pinacoidal crystal class, with space group P1̅) or thaumasite (i.e. Ca₃Si(OH)₆(CO₃)(SO₄)·12H₂O crystallising in the hexagonal crystal system, pyramidal crystal class, with space group P6₃).

The hydrated calcium silicate present in the precursor material may be provided in a mixture of different mineral forms.

The hydrated calcium silicate present in the precursor material may comprise no less than about 10 wt. %, for example, no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, of tobermorite. The hydrated calcium silicate present in the precursor material may comprise up to about 100 wt. %, for example, no greater than about 99 wt. %, or no greater than about 90 wt. %, or no greater than about 80 wt. %, or no greater than about 70 wt. %, or no greater than about 60 wt. %, or no greater than about 50 wt. %, of tobermorite. The hydrated calcium silicate present in the precursor material may comprise from about 10 wt. % to about 100 wt. %, for example, from about 10 wt. % to about 99 wt. %, or from about 10 wt. % to about 90 wt. %, or from about 10 wt. % to about 80 wt. %, or from about 10 wt. % to about 70 wt. %, or from about 10 wt. % to about 60 wt. %, or from about 10 wt. % to about 50 wt. %, or from about 20 wt. % to about 100 wt. %, or from about 20 wt. % to about 99 wt. %, or from about 20 wt. % to about 90 wt. %, or from about 20 wt. % to about 80 wt. %, or from about 20 wt. % to about 70 wt. %, or from about 20 wt. % to about 60 wt. %, or from about 20 wt. % to about 50 wt. %, or from about 30 wt. % to about 100 wt. %, or from about 30 wt. % to about 99 wt. %, or from about 30 wt. % to about 90 wt. %, or from about 30 wt. % to about 80 wt. %, or from about 30 wt. % to about 70 wt. %, or from about 30 wt. % to about 60 wt. %, or from about 30 wt. % to about 50 wt. %, or from about 40 wt. % to about 100 wt. %, or from about 40 wt. % to about 99 wt. %, or from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 100 wt. %, or from about 50 wt. % to about 99 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 100 wt. %, or from about 60 wt. % to about 99 wt. %, or from about 60 wt. % to about 90 wt. %, or from about 60 wt. % to about 80 wt. %, or from about 60 wt. % to about 70 wt. %, or from about 70 wt. % to about 100 wt. %, or from about 70 wt. % to about 99 wt. %, or from about 70 wt. % to about 90 wt. %, or from about 70 wt. % to about 80 wt. %, or from about 80 wt. % to about 100 wt. %, or from about 80 wt. % to about 99 wt. %, or from about 80 wt. % to about 90 wt. %, or from about 90 wt. % to about 100 wt. %, or from about 90 wt. % to about 99 wt. %, of tobermorite.

The precursor material may comprise no less than about 10 wt. %, for example, no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, of tobermorite. The precursor material may comprise up to about 100 wt. %, for example, no greater than about 99 wt. %, or no greater than about 90 wt. %, or no greater than about 80 wt. %, or no greater than about 70 wt. %, or no greater than about 60 wt. %, or no greater than about 50 wt. %, of tobermorite. The precursor material may comprise from about 10 wt. % to about 100 wt. %, for example, from about 10 wt. % to about 99 wt. %, or from about 10 wt. % to about 90 wt. %, or from about 10 wt. % to about 80 wt. %, or from about 10 wt. % to about 70 wt. %, or from about 10 wt. % to about 60 wt. %, or from about 10 wt. % to about 50 wt. %, or from about 20 wt. % to about 100 wt. %, or from about 20 wt. % to about 99 wt. %, or from about 20 wt. % to about 90 wt. %, or from about 20 wt. % to about 80 wt. %, or from about 20 wt. % to about 70 wt. %, or from about 20 wt. % to about 60 wt. %, or from about 20 wt. % to about 50 wt. %, or from about 30 wt. % to about 100 wt. %, or from about 30 wt. % to about 99 wt. %, or from about 30 wt. % to about 90 wt. %, or from about 30 wt. % to about 80 wt. %, or from about 30 wt. % to about 70 wt. %, or from about 30 wt. % to about 60 wt. %, or from about 30 wt. % to about 50 wt. %, or from about 40 wt. % to about 100 wt. %, or from about 40 wt. % to about 99 wt. %, or from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 100 wt. %, or from about 50 wt. % to about 99 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 100 wt. %, or from about 60 wt. % to about 99 wt. %, or from about 60 wt. % to about 90 wt. %, or from about 60 wt. % to about 80 wt. %, or from about 60 wt. % to about 70 wt. %, or from about 70 wt. % to about 100 wt. %, or from about 70 wt. % to about 99 wt. %, or from about 70 wt. % to about 90 wt. %, or from about 70 wt. % to about 80 wt. %, or from about 80 wt. % to about 100 wt. %, or from about 80 wt. % to about 99 wt. %, or from about 80 wt. % to about 90 wt. %, or from about 90 wt. % to about 100 wt. %, or from about 90 wt. % to about 99 wt. %, of tobermorite.

In addition to hydrated calcium silicate, the precursor material may comprise calcium carbonate (CaCO₃). The calcium carbonate present in the precursor material may comprise (e.g. be) calcium carbonate in the form of calcite (i.e. calcium carbonate crystallised in the trigonal crystal system, hexagonal scalenohedral crystal class, with space group R3c), aragonite (i.e. calcium carbonate crystallised in the orthorhombic crystal system, dipyramidal crystal class, with space group Pmcn) and/or vaterite (i.e. calcium carbonate crystallised in the hexagonal crystal system, dihexagonal dipyramidal crystal class, with space group P6₃/mmc).

In addition to hydrated calcium silicate, and optionally in addition to calcium carbonate, the precursor material may comprise silica (SiO₂). The silica present in the precursor material may comprise (e.g. be) silica in the form of quartz, for example α-quartz or β-quartz, cristobalite, coesite, tridymite and/or stishovite.

It may be that the precursor material comprises hydrated calcium silicate, calcium carbonate and silica. It may be that the precursor material comprises tobermorite, calcite and/or vaterite, and quartz. It may be that the precursor material comprises tobermorite, calcite, vaterite and quartz.

In addition to hydrated calcium silicate, the precursor material may comprise calcium silicate (CaSiO₃), i.e. non-hydrated calcium silicate. The calcium silicate present in the precursor material may comprise (e.g. be) one or more calcium inosilicates, that is to say one or more forms of calcium silicate having a structure including interlocking chains of silicate tetrahedra. The calcium silicate present in the precursor material may comprise (e.g. be) calcium inosilicate in the form of wollastonite. Wollastonite is a calcium inosilicate mineral having chemical formula CaSiO₃. Wollastonite may also contain small amounts of iron, magnesium and/or manganese substituting for calcium. Wollastonite typically crystallises in the triclinic crystal system, pinacoidal crystal class, with space group P1̅. CaSiO₃ may also be found crystallised in the monoclinic crystal system, prismatic class, with space group C2/c, in a form known as pseudowollastonite. Accordingly, the calcium silicate present in the precursor material may comprise (e.g. be) calcium silicate in the form of pseudowollastonite.

It may be that the precursor material comprises hydrated calcium silicate, calcium silicate, calcium carbonate and silica. It may be that the precursor material comprises tobermorite, wollastonite and/or pseudowollastonite, calcite and/or vaterite, and quartz.

It will be appreciated that the mineralogical content of a material may be determined using X-Ray Diffractometry (XRD), for example using a SIEMENS D5000 Diffractometer with Cu Kα1 (Ni filtered) radiation, in the 2θ range from 2° to 72° and a 0.02°/sec step. The relative amount of each mineral phase identified in the resultant XRD pattern may be determined using the Reference Intensity Ratio (RIR) method.

The precursor material may comprise no less than about 10 wt. %, for example, no less than about 20 wt. %, or no less than about 30 wt. %, or no less than about 35 wt. %, of SiO₂. The precursor material may comprise no greater than about 70 wt. %, for example, no greater than about 60 wt. %, or no greater than about 55 wt. %, or no greater than about 50 wt. %, or no greater than about 45 wt. %, or no greater than about 40 wt. %, of SiO₂. The precursor material may comprise from about 10 wt. % to about 70 wt. %, for example, from about 20 wt. % to about 60 wt. %, or from about 30 wt. % to about 55 wt. %, or from about 30 wt. % to about 50 wt. %, or from about 35 wt. % to about 45 wt. %, of SiO₂.

The precursor material may comprise no less than about 10 wt. %, for example, no less than about 20 wt. %, or no less than about 25 wt. %, or no less than about 30 wt. %, of CaO. The precursor material may comprise no greater than about 60 wt. %, for example, no greater than about 50 wt. %, or no greater than about 45 wt. %, or no greater than about 40 wt. %, of CaO. The precursor material may comprise from about 10 wt. % to about 60 wt. %, for example, from about 20 wt. % to about 50 wt. %, or from about 25 wt. % to about 45 wt. %, or from about 30 wt. % to about 40 wt. %, of CaO.

The precursor material may comprise no less than about 0.1 wt. %, for example, no less than about 0.5 wt. % of MgO. The precursor material may comprise no greater than about 3 wt. %, for example, no greater than about 2 wt. %, or no greater than about 1.5 wt. % of MgO. The precursor material may comprise from about 0.1 wt. % to about 3 wt. %, for example, from about 0.5 wt. % to about 2 wt. %, or from about 0.5 wt. % to about 1.5 wt. %, of MgO.

The precursor material may comprise no less than about 0.1 wt. %, for example, no less than about 0.5 wt. %, or no less than about 1 wt. %, of Al₂O₃. The precursor material may comprise no greater than about 4 wt. %, for example, no greater than about 3 wt. %, or no greater than about 2 wt. %, of Al₂O₃. The precursor material may comprise from about 0.1 wt. % to about 4 wt. %, for example, from about 0.5 wt. % to about 3 wt. %, or from about 1 wt. % to about 2 wt. %, of Al₂O₃.

The precursor material may comprise no less than about 0.005 wt. %, for example, no less than about 0.01 wt. %, of TiO₂. The precursor material may comprise no more than about 1.5 wt. %, for example, no more than about 1 wt. %, or no more than about 0.5 wt. %, of TiO₂. The precursor material may comprise from about 0.005 wt. % to about 1.5 wt. %, for example, from about 0.01 wt. % to about 1 wt. %, or from about 0.01 wt. % to about 0.5 wt. %, of TiO₂.

The precursor material may comprise no less than about 0.01 wt. %, for example, no less than about 0.1 wt. %, of Fe₂O₃. The precursor material may comprise no greater than about 2 wt. %, for example, no greater than about 1.5 wt. %, or no greater than about 1 wt. %, or no greater than about 0.5 wt. %, of Fe₂O₃. The precursor material may comprise from about 0.01 wt. % to about 2 wt. %, for example, from about 0.1 wt. % to about 1.5 wt. %, or from about 0.1 wt. % to about 1 wt. %, or from about 0.1 wt. % to about 0.5 wt. %, of Fe₂O₃.

The precursor material may comprise no less than about 0.001 wt. %, for example, no less than about 0.01 wt. %, of MnO₂. The precursor material may comprise no greater than about 1 wt. %, for example, no greater than about 0.1 wt. %, of MnO₂. The precursor material may comprise from about 0.001 wt. % to about 1 wt. %, for example, from about 0.01 wt. % to about 0.1 wt. %, of MnO₂.

The precursor material may comprise no less than about 0.005 wt. %, for example, no less than about 0.01 wt. %, of Pb₂O₅. The precursor material may comprise no greater than about 1 wt. %, for example no greater than about 0.1 wt. %, or no greater than about 0.05 wt. %, of Pb₂O₅. The precursor material may comprise from about 0.005 wt. % to about 1 wt. %, for example, from about 0.01 wt. % to about 0.1 wt. %, or from about 0.01 wt. % to about 0.05 wt. %, of Pb₂O₅.

The precursor material may comprise less than or equal to about 1 wt. %, for example, less than or equal to about 0.5 wt. %, or less than or equal to about 0.1 wt. %, or less than or equal to about 0.01 wt. %, or less than or equal to about 0.001 wt. %, of Na₂O. The precursor material may comprise no less than about 0.0001 wt. % of Na₂O. The precursor material may comprise from about 0.0001 wt. % to about 1 wt. %, for example, from about 0.0001 wt. % to about 0.5 wt. %, or from about 0.0001 wt. % to about 0.1 wt. %, or from about 0.0001 wt. % to about 0.01 wt. %, or from about 0.0001 wt. % to about 0.001 wt. %, of Na₂O. The precursor material may comprise substantially no Na₂O, i.e. the precursor material may be substantially Na₂O-free.

The precursor material may comprise no less than about 0.001 wt. %, for example, no less than about 0.01 wt. %, of K₂O. The precursor material may comprise no greater than about 0.5 wt. %, for example, no greater than about 0.1 wt. %, or no greater than about 0.06 wt. %, of K₂O. The precursor material may comprise from about 0.001 wt. % to about 0.5 wt. %, for example, from about 0.01 wt. % to about 0.1 wt. %, or from about 0.01 wt. % to about 0.06 wt. %, of K₂O.

The precursor material may comprise no less than about 0.5 wt. %, for example, no less than about 1 wt. %, or no less than about 3 wt. %, or no less than about 5 wt. %, of H₂O. The precursor material may comprise no greater than about 40 wt. %, for example, no greater than about 35 wt. %, or no greater than about 30 wt. %, or no greater than about 25 wt. %, or no greater than about 20 wt. %, or no greater than about 15 wt. %, or no greater than about 10 wt. %, or no greater than about 8 wt. %, of H₂O. The precursor material may comprise from about 0.5 wt. % to about 40 wt. %, for example, from about 0.5 wt. % to about 30 wt. %, or from about 1 wt. % to about 25 wt. %, or from about 5 wt. % to about 30 wt. %, or from about 5 wt. % to about 25 wt. %, or from about 1 wt. % to about 10 wt. %, or from about 3 wt. % to about 10 wt. %, or from about 3 wt. % to about 8 wt. %, or from about 5 wt. % to about 8 wt. %, or from about 5 wt. % to about 15 wt. %, of H₂O.

Water present in the precursor material may be chemically bound water (e.g. water bound in a hydrated mineral lattice) or unbound water (e.g. free water molecules present in the precursor material).

The precursor material may comprise no less than about 0.5 wt. %, for example, no less than about 1 wt. %, or no less than about 3 wt. %, or no less than about 5 wt. %, of chemically bound H₂O. The precursor material may comprise no greater than about 40 wt. %, for example, no greater than about 35 wt. %, or no greater than about 30 wt. %, or no greater than about 25 wt. %, or no greater than about 20 wt. %, or no greater than about 15 wt. %, or no greater than about 10 wt. %, or no greater than about 8 wt. %, of chemically bound H₂O. The precursor material may comprise from about 0.5 wt. % to about 40 wt. %, for example, from about 0.5 wt. % to about 30 wt. %, or from about 1 wt. % to about 25 wt. %, or from about 5 wt. % to about 30 wt. %, or from about 5 wt. % to about 25 wt. %, or from about 1 wt. % to about 10 wt. %, or from about 3 wt. % to about 10 wt. %, or from about 3 wt. % to about 8 wt. %, or from about 5 wt. % to about 8 wt. %, or from about 5 wt. % to about 15 wt. %, of chemically bound H₂O.

The precursor material may comprise no less than about 0.1 wt. %, for example, no less than about 0.5 wt. %, or no less than about 1 wt. %, or no less than about 1.5 wt. %, or no less than about 2 wt. %, or no less than about 3 wt. %, of unbound (i.e. free) H₂O. The precursor material may comprise no greater than about 15 wt. %, for example, no greater than about 10 wt. %, or no greater than about 8 wt. %, or no greater than about 5 wt. %, or no greater than about 4 wt. %, of unbound (i.e. free) H₂O. The precursor material may comprise from about 0.1 wt. % to about 15 wt. %, for example, from about 0.5 wt. % to about 10 wt. %, or from about 1 wt. % to about 5 wt. %, or from about 2 wt. % to about 4 wt. %, or from about 3 wt. % to about 4 wt. %, of unbound (i.e. free) H₂O.

The precursor material may comprise no less than about 0.5 wt. %, for example, no less than about 1 wt. %, or no less than about 3 wt. %, or no less than about 5 wt. %, of total H₂O (i.e. including both chemically bound and unbound (i.e. free) H₂O). The precursor material may comprise no greater than about 40 wt. %, for example, no greater than about 35 wt. %, or no greater than about 30 wt. %, or no greater than about 25 wt. %, or no greater than about 20 wt. %, or no greater than about 15 wt. %, or no greater than about 10 wt. %, or no greater than about 8 wt. %, of total H₂O (i.e. including both chemically bound and unbound (i.e. free) H₂O). The precursor material may comprise from about 0.5 wt. % to about 40 wt. %, for example, from about 0.5 wt. % to about 30 wt. %, or from about 1 wt. % to about 25 wt. %, or from about 5 wt. % to about 30 wt. %, or from about 5 wt. % to about 25 wt. %, or from about 1 wt. % to about 10 wt. %, or from about 3 wt. % to about 10 wt. %, or from about 3 wt. % to about 8 wt. %, or from about 5 wt. % to about 8 wt. %, or from about 5 wt. % to about 15 wt. %, of total H₂O (i.e. including both chemically bound and unbound (i.e. free) H₂O).

The precursor material may comprise: from about 10 wt. % to about 70 wt. %, for example, from about 20 wt. % to about 60 wt. %, or from about 30 wt. % to about 55 wt. %, or from about 30 wt. % to about 50 wt. %, or from about 35 wt. % to about 45 wt. %, of SiO₂; and from about 10 wt. % to about 60 wt. %, for example, from about 20 wt. % to about 50 wt. %, or from about 25 wt. % to about 45 wt. %, or from about 30 wt. % to about 40 wt. %, of CaO.

The precursor material may comprise: from about 10 wt. % to about 70 wt. %, for example, from about 20 wt. % to about 60 wt. %, or from about 30 wt. % to about 55 wt. %, or from about 30 wt. % to about 50 wt. %, or from about 35 wt. % to about 45 wt. %, of SiO₂; and from about 10 wt. % to about 60 wt. %, for example, from about 20 wt. % to about 50 wt. %, or from about 25 wt. % to about 45 wt. %, or from about 30 wt. % to about 40 wt. %, of CaO; and optionally: from about 0.1 wt. % to about 3 wt. %, for example, from about 0.5 wt. % to about 2 wt. %, or from about 0.5 wt. % to about 1.5 wt. %, of MgO; from about 0.1 wt. % to about 4 wt. %, for example, from about 0.5 wt. % to about 3 wt. %, or from about 1 wt. % to about 2 wt. %, of Al₂O₃; from about 0.005 wt. % to about 1.5 wt. %, for example, from about 0.01 wt. % to about 1 wt. %, or from about 0.01 wt. % to about 0.5 wt. %, of TiO₂; from about 0.01 wt. % to about 2 wt. %, for example, from about 0.1 wt. % to about 1.5 wt. %, or from about 0.1 wt. % to about 1 wt. %, or from about 0.1 wt. % to about 0.5 wt. %, of Fe₂O₃; from about 0.001 wt. % to about 1 wt. %, for example, from about 0.01 wt. % to about 0.1 wt. %, of MnO₂; from about 0.005 wt. % to about 1 wt. %, for example, from about 0.01 wt. % to about 0.1 wt. %, or from about 0.01 wt. % to about 0.05 wt. %, of Pb₂O₅; less than or equal to about 1 wt. %, for example, less than or equal to about 0.5 wt. %, or less than or equal to about 0.1 wt. %, or less than or equal to about 0.01 wt. %, or less than or equal to about 0.001 wt. %, of Na₂O; from about 0.001 wt. % to about 0.5 wt. %, for example, from about 0.01 wt. % to about 0.1 wt. %, or from about 0.01 wt. % to about 0.06 wt. %, of K₂O; and/or from about 0.5 wt. % to about 40 wt. %, for example, from about 0.5 wt. % to about 30 wt. %, or from about 1 wt. % to about 25 wt. %, or from about 5 wt. % to about 30 wt. %, or from about 5 wt. % to about 25 wt. %, or from about 1 wt. % to about 10 wt. %, or from about 3 wt. % to about 10 wt. %, or from about 3 wt. % to about 8 wt. %, or from about 5 wt. % to about 8 wt. %, or from about 5 wt. % to about 15 wt. %, of H₂O.

The precursor material may comprise: from about 10 wt. % to about 70 wt. %, for example, from about 20 wt. % to about 60 wt. %, or from about 30 wt. % to about 55 wt. %, or from about 30 wt. % to about 50 wt. %, or from about 35 wt. % to about 45 wt. %, of SiO₂; from about 10 wt. % to about 60 wt. %, for example, from about 20 wt. % to about 50 wt. %, or from about 25 wt. % to about 45 wt. %, or from about 30 wt. % to about 40 wt. %, of CaO; from about 0.1 wt. % to about 3 wt. %, for example, from about 0.5 wt. % to about 2 wt. %, or from about 0.5 wt. % to about 1.5 wt. %, of MgO; from about 0.1 wt. % to about 4 wt. %, for example, from about 0.5 wt. % to about 3 wt. %, or from about 1 wt. % to about 2 wt. %, of Al₂O₃; from about 0.005 wt. % to about 1.5 wt. %, for example, from about 0.01 wt. % to about 1 wt. %, or from about 0.01 wt. % to about 0.5 wt. %, of TiO₂; from about 0.01 wt. % to about 2 wt. %, for example, from about 0.1 wt. % to about 1.5 wt. %, or from about 0.1 wt. % to about 1 wt. %, or from about 0.1 wt. % to about 0.5 wt. %, of Fe₂O₃; from about 0.001 wt. % to about 1 wt. %, for example, from about 0.01 wt. % to about 0.1 wt. %, of MnO₂; from about 0.005 wt. % to about 1 wt. %, for example, from about 0.01 wt. % to about 0.1 wt. %, or from about 0.01 wt. % to about 0.05 wt. %, of Pb₂O₅; less than or equal to about 1 wt. %, for example, less than or equal to about 0.5 wt. %, or less than or equal to about 0.1 wt. %, or less than or equal to about 0.01 wt. %, or less than or equal to about 0.001 wt. %, of Na₂O; from about 0.001 wt. % to about 0.5 wt. %, for example, from about 0.01 wt. % to about 0.1 wt. %, or from about 0.01 wt. % to about 0.06 wt. %, of K₂O; and from about 0.5 wt. % to about 40 wt. %, for example, from about 0.5 wt. % to about 30 wt. %, or from about 1 wt. % to about 25 wt. %, or from about 5 wt. % to about 30 wt. %, or from about 5 wt. % to about 25 wt. %, or from about 1 wt. % to about 10 wt. %, or from about 3 wt. % to about 10 wt. %, or from about 3 wt. % to about 8 wt. %, or from about 5 wt. % to about 8 wt. %, or from about 5 wt. % to about 15 wt. %, of H₂O.

The precursor material may comprise: from about 30 wt. % to about 50 wt. % of SiO₂; and from about 25 wt. % to about 45 wt. % of CaO; and optionally: from about 0.5 wt. % to about 2 wt. % of MgO; from about 0.5 wt. % to about 3 wt. % of Al₂O₃; from about 0.005 wt. % to about 1.5 wt. % of TiO₂; from about 0.1 wt. % to about 1 wt. % of Fe₂O₃; from about 0.01 wt. % to about 0.1 wt. % of MnO₂; from about 0.005 wt. % to about 0.1 wt. % of P₂O₅; less than or equal to about 0.1 wt. % of Na₂O; from about 0.01 wt. % to about 0.1 wt. % of K₂O; and/or from about 1 wt. % to about 10 wt. % of H₂O.

The precursor material may comprise: from about 30 wt. % to about 50 wt. % of SiO₂; and from about 25 wt. % to about 45 wt. % of CaO; from about 0.5 wt. % to about 2 wt. % of MgO; from about 0.5 wt. % to about 3 wt. % of Al₂O₃; from about 0.005 wt. % to about 1.5 wt. % of TiO₂; from about 0.1 wt. % to about 1 wt. % of Fe₂O₃; from about 0.01 wt. % to about 0.1 wt. % of MnO₂; from about 0.005 wt. % to about 0.1 wt. % of P₂O₅; less than or equal to about 0.1 wt. % of Na₂O; from about 0.01 wt. % to about 0.1 wt. % of K₂O; and from about 1 wt. % to about 10 wt. % of H₂O.

The precursor material may comprise: from about 35 wt. % to about 45 wt. % of SiO₂; from about 30 wt. % to about 40 wt. % of CaO; from about 0.5 wt. % to about 1.5 wt. % of MgO; from about 1 wt. % to about 2 wt. % of Al₂O₃; from about 0.01 wt. % to about 0.5 wt. % of TiO₂; from about 0.1 wt. % to about 0.5 wt. % of Fe₂O₃; from about 0.01 wt. % to about 0.1 wt. % of MnO₂; from about 0.01 wt. % to about 0.05 wt. % of Pb₂O₅; less than or equal to about 0.001 wt. %, of Na₂O; from about 0.01 wt. % to about 0.06 wt. % of K₂O; from about 5 wt. % to about 15 wt. % of H₂O.

It will be appreciated that, throughout this specification and the appended claims, unless stated otherwise, the elemental composition of a material is expressed in terms of the oxide equivalents of the elements present, as is standard in the field. For example, the composition of a material containing silicon, calcium, magnesium, aluminium, titanium, iron, manganese, phosphorous, sodium and/or potassium is expressed in terms of the equivalent content of SiO₂, CaO, MgO, Al₂O₃, TiO₂, Fe₂O₃, MnO₂, P₂O₅, Na₂O and/or K₂O respectively. The elemental composition of a material may be determined using X-ray based methods, for example using Energy Dispersive X-Ray Fluoresence (EDXRF) (for example using the Xepos instrument available from SPECTRO A. I. GmbH).

The precursor material may be a thermally insulating material and/or a refractory material. For example, the precursor material may comprise (e.g. be) a thermally insulating ceramic and/or a refractory ceramic. For example, the precursor material may comprise (e.g. be) an oxide ceramic. The thermally insulating and/or refractory material (e.g. the thermally insulating and/or refractory or oxide ceramic) may be provided in the form of a thermally insulating and/or refractory powder. The thermally insulating and/or refractory material (e.g. the thermally insulating and/or refractory or oxide ceramic) may be provided in the form of one or more thermally insulating and/or refractory bricks. Alternatively, the thermally insulating and/or refractory material (e.g. the thermally insulating and/or refractory or oxide ceramic) may be derived from one or more thermally insulating and/or refractory bricks. For example, the thermally insulating and/or refractory material may be prepared by crushing or grinding one or more thermally insulating and/or refractory bricks. The one or more thermally insulating and/or refractory bricks may be one or more reclaimed thermally insulating and/or refractory bricks, that is to say thermally insulating and/or refractory bricks which have been used previously, for example thermally insulating and/or refractory bricks which have previously undergone one or more heating cycles in a furnace, kiln, firebox or fireplace. Thermally insulating and/or refractory bricks may be produced by steam processing (e.g. digestion) of materials such as quartz and calcite, followed by pressing, shaping and drying the steam processed (i.e. digested) material. Accordingly, the thermally insulating and/or refractory material (e.g. the thermally insulating and/or refractory or oxide ceramic) may comprise (e.g. be) steam processed (e.g. digested) material (e.g. quartz and calcite), for example, prior to or following shaping into bricks.

The precursor material may be a thermally insulating and/or refractory material in the form of, or derived from, one or more (e.g. reclaimed) thermally insulating and/or refractory bricks comprising: from about 30 wt. % to about 50 wt. % of SiO₂; and from about 25 wt. % to about 45 wt. % of CaO; from about 0.5 wt. % to about 2 wt. % of MgO; from about 0.5 wt. % to about 3 wt. % of Al₂O₃; from about 0.005 wt. % to about 1.5 wt. % of TiO₂; from about 0.1 wt. % to about 1 wt. % of Fe₂O₃; from about 0.01 wt. % to about 0.1 wt. % of MnO₂; from about 0.005 wt. % to about 0.1 wt. % of P₂O₅; less than or equal to about 0.1 wt. % of Na₂O; from about 0.01 wt. % to about 0.1 wt. % of K₂O; and from about 1 wt. % to about 10 wt. % of H₂O.

The precursor material may be a thermally insulating and/or refractory material in the form of, or derived from, one or more (e.g. reclaimed) thermally insulating and/or refractory bricks comprising: from about 35 wt. % to about 45 wt. % of SiO₂; from about 30 wt. % to about 40 wt. % of CaO; from about 0.5 wt. % to about 1.5 wt. % of MgO; from about 1 wt. % to about 2 wt. % of Al₂O₃; from about 0.01 wt. % to about 0.5 wt. % of TiO₂; from about 0.1 wt. % to about 0.5 wt. % of Fe₂O₃; from about 0.01 wt. % to about 0.1 wt. % of MnO₂; from about 0.01 wt. % to about 0.05 wt. % of Pb₂O₅; less than or equal to about 0.001 wt. %, of Na₂O; from about 0.01 wt. % to about 0.06 wt. % of K₂O; from about 5 wt. % to about 15 wt. % of H₂O.

### Method

It will be appreciated that calcining the precursor material comprises heating the precursor material. Calcining may take place in a kiln (such as a tunnel kiln) or furnace.

The method comprises calcining the precursor material at a temperature equal to or greater than about 800°C. The method may comprise calcining the precursor material at a temperature equal to or greater than about 900°C, for example, equal to or greater than about 1000°C, or equal to or greater than about 1100°C, or equal to or greater than about 1150°C, or equal to or greater than about 1200°C. The method may comprise calcining the precursor material at a temperature no greater than about 2000°C, for example, no greater than about 1600°C, or no greater than about 1400°C, or no greater than about 1300°C, or no greater than about 1250°C. The method may comprise calcining the precursor material at a temperature from about 800°C to about 2000°C, for example, from about 800°C to about 1600°C, or from about 800°C to about 1400°C, or from about 900°C to about 1400°C, or from about 1000°C to about 1300°C, or from about 1100°C to about 1300°C, or from about 1150°C to about 1250°C, or from about 1200°C to about 1300°C, or from about 1200°C to about 1250°C.

The method may comprise heating the precursor material to a first calcining temperature and subsequently heating the precursor material to a second calcining temperature. For example, the method may comprise heating the precursor material to a first calcining temperature at a first heating rate, and subsequently heating the precursor material to a second calcining temperature at a second heating rate. Both the first calcining temperature and the second calcining temperature may be equal to or greater than about 800°C. The second calcining temperature may be higher than the first calcining temperature. The second heating rate may be higher than the first heating rate.

The method may comprise heating the precursor material to the first calcining temperature, subsequently heating the precursor material to the second calcining temperature, and subsequently cooling the calcined material. Cooling the calcined material may comprise cooling the calcined material to room temperature. Cooling the calcined material may comprise cooling the calcined material at a first cooling rate. The first calcining temperature may be no less than about 800°C. The first calcining temperature may be no greater than about 1000°C, for example, no greater than about 900°C, or no greater than about 850°C. The first calcining temperature may be from about 800°C to about 1000°C, for example, from about 800°C to about 900°C, or from about 800°C to about 850°C, for example about 800°C.

The first heating rate may be no less than about 50°C/hour, for example, no less than about 60°C/hour, or no less than about 70°C/hour. The first heating rate may be no more than about 100°C/hour, for example, no more than about 90°C/hour, or no more than about 80°C/hour. The first heating rate may be from about 50°C/hour to about 100°C/hour, for example, from about 60°C/hour to about 90°C/hour, or from about 70°C/hour to about 80°C/hour.

The second calcining temperature may be no less than about 1000°C, for example, no less than about 1100°C, or no less than about 1200°C. The second calcining temperature may be no more than about 1400°C, for example, no more than about 1300°C, or no more than about 1250°C. The second calcining temperature may be from about 1000°C to about 1400°C, for example, from about 1100°C to about 1300°C, or from about 1200°C to about 1250°C.

The second heating rate may be no less than about 80°C/hour, for example, no less than about 90°C/hour. The second heating rate may be no more than about 120°C/hour, for example, no more than about 110°C/hour. The second heating rate may be from about 80°C/hour to about 120°C/hour, for example, from about 90°C/hour to about 110°C/hour, for example about 100°C/hour.

The first cooling rate may be no less than about 70°C/hour, for example, no less than about 80°C/hour, or no less than about 90°C/hour, or no less than about 100°C/hour. The first cooling rate may be no greater than about 190°C/hour, for example, no greater than about 170°C/hour, or no greater than about 150°C/hour. The first cooling rate may be from about 70°C/hour to about 190°C/hour, for example, from about 80°C/hour to about 170°C/hour, or from about 90°C/hour to about 150 °C/hour.

Accordingly, the method may comprise: heating the precursor material, at the first heating rate, to the first calcining temperature equal to or greater than 800°C; subsequently heating the precursor material, at the second heating rate, to the second calcining temperature, wherein the second calcining temperature is higher than the first calcining temperature and the second heating rate is higher than the first heating rate; and subsequently cooling the calcined material, for example to room temperature, at the first cooling rate.

The method may comprise: heating the precursor material, at the first heating rate from about 50°C/hour to about 100°C/hour, for example, from about 60°C/hour to about 90°C/hour, or from about 70°C/hour to about 80°C/hour, to the first calcining temperature from about 800°C to about 1000°C, for example, from about 800°C to about 900°C, or from about 800°C to about 850°C, for example about 800°C; subsequently heating the precursor material, at the second heating rate from about 80°C/hour to about 120°C/hour, for example, from about 90°C/hour to about 110°C/hour, for example about 100°C/hour, to the second calcining temperature from about 1000°C to about 1400°C, for example, from about 1100°C to about 1300°C, or from about 1200°C to about 1250°C, wherein the second calcining temperature is higher than the first calcining temperature and the second heating rate is higher than the first heating rate; and subsequently cooling the calcined material, for example to room temperature, at the first cooling rate from about 70°C/hour to about 190°C/hour, for example, from about 80°C/hour to about 170°C/hour, or from about 90°C/hour to about 150 °C/hour.

The method may comprise heating the precursor material to the first calcining temperature over a period of no less than about one hour, for example, no less than about two hours, or no less than about three hours, or no less than about four hours, or no less than about five hours, or no less than about six hours, or no less than about seven hours, or no less than about eight hours, or no less than about nine hours. The method may comprise heating the precursor material to the first calcining temperature over a period of no greater than about twenty-four hours, for example, no greater than about twenty hours, or no greater than about eighteen hours, or no greater than about sixteen hours, or no greater than about fourteen hours, or no greater than about twelve hours, or no greater than about eleven hours. The method may comprise heating the precursor material to the first calcining temperature over a period from about one hour to about twenty-four hours, for example, from about three hours to about eighteen hours, or from about five hours to about sixteen hours, or from about eight hours to about twelve hours, or from about nine hours to about eleven hours, for example about ten hours. The method may comprise heating the precursor material from the first calcining temperature to the second calcining temperature over a period of no less than about one hour, for example, no less than about two hours, or no less than about three hours. The method may comprise heating the precursor material from the first calcining temperature to the second calcining temperature over a period of no greater than about ten hours, for example, no greater than about eight hours, or no greater than about six hours, or no greater than about five hours. The method may comprise heating the precursor material from the first calcining temperature to the second calcining temperature over a period from about one hour to about ten hours, for example, from about two hours to about eight hours, or from about three hours to about six hours, or from about three hours to about five hours, for example about four hours.

The method may comprise holding the precursor material at the second calcining temperature for no less than about 30 minutes, for example, no less than about one hour. The method may comprise holding the precursor material at the second calcining temperature for no greater than about twenty-four hours, for example, no greater than about twelve hours, or no greater than about six hours, or no greater than about three hours. The method may comprise holding the precursor material at the second calcining temperature for from about 30 minutes to about twenty-four hours, for example, from about 30 minutes to about twelve hours, or from about one hour to about twelve hours, or from about one hour to about six hours, or from about one hour to about three hours. The method may comprise holding the precursor material at the second calcining temperature for about two hours.

The precursor material may become (for example, may be transformed into) the calcined material while it is held at the second calcining temperature. Alternatively, the precursor material may begin to transform into the calcined material at the first calcining temperature and may complete transforming into the calcined material at the second calcining temperature. For example, it may be that the precursor material is dehydrated at the first calcining temperature and that the dehydrated precursor material transforms into the calcined material at the second calcining temperature. It may be that dehydration of the precursor material at the first calcining temperature proceeds without substantial structural phase transformation. It may be that transformation of the dehydrated precursor material to the calcined material at the second calcining temperature proceeds via a structural phase transformation. For example, it may be that hydrated calcium silicate is dehydrated to dehydrated calcium silicate without substantial structural phase transformation at the first calcining temperature and subsequently that dehydrated calcium silicate transforms into calcium inosilicate at the second calcining temperature. For example, it may be that tobermorite is dehydrated to dehydrated tobermorite at the first calcining temperature, and that dehydrated tobermorite transforms to wollastonite or pseudowollastonite at the second calcining temperature.

The method may comprise cooling the calcined material from the second calcining temperature to room temperature over a period no less than about one hour, for example, no less than about two hours, or no less than about four hours, or no less than about six hours, or no less than about seven hours. The method may comprise cooling the calcined material from the second calcining temperature to room temperature over a period no greater than about twenty-four hours, for example, no greater than about eighteen hours, or no greater than about fourteen hours, or no greater than about ten hours, or no greater than about nine hours. The method may comprise cooling the calcined material from the second calcining temperature to room temperature over a period from about one hour to about twenty-four hours, for example, from about two hours to about eighteen hours, or from about four hours to about sixteen hours, or from about six hours to about fourteen hours, or from about six hours to about ten hours, or from about seven hours to about nine hours, for example about eight hours.

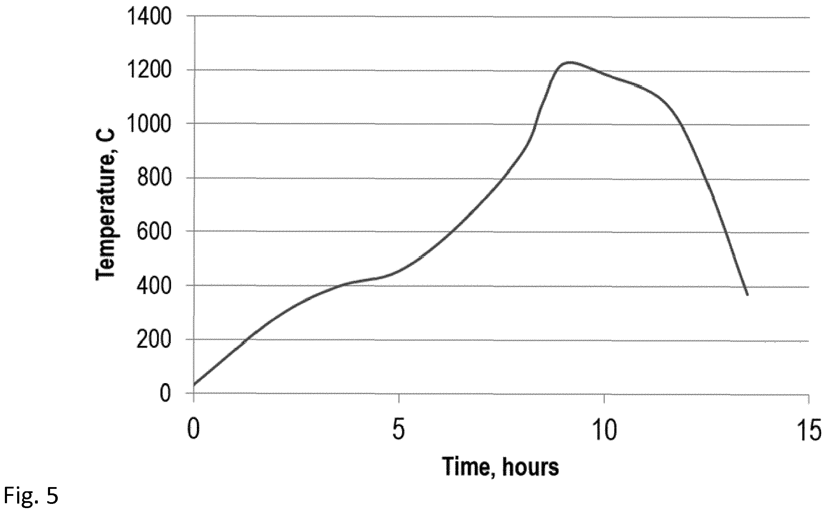

Figure 5 shows the furnace temperature as a function of time measured experimentally in an example method of calcining the precursor material. In this example: the precursor material is heated from room temperature up to about 400°C over about five hours; the precursor material is subsequently heated from about 400°C up to about 1250°C over about four hours; the calcined material is subsequently cooled to about 1100°C over about three and a half hours; the calcined material is then cooled from about 1100°C to about 400°C over about two hours.

The method may comprise crushing and/or grinding (i.e. milling) the calcined material (i.e. the material formed on calcining the precursor material) to produce a granular material (i.e. a granular calcined material). Crushing and/or grinding (i.e. milling) of the calcined material may take place in any suitable crushing and/or grinding (i.e. milling) apparatus, for example in a pulveriser, ball mill or hammer mill.

The granular material may have a d₅₀ of no less than about 1 µm, for example, no less than about 10 µm, or no less than about 20 µm, or no less than about 30 µm, or no less than about 40 µm, or no less than about 50 µm, or no less than about 60 µm, or no less than about 70 µm, or no less than about 80 µm, or no less than about 90 µm, or no less than about 100 µm. The granular material may have a d₅₀ of no greater than about 500 µm, for example, no greater than about 400 µm, or no greater than about 300 µm, or no greater than about 250 µm, or no greater than about 200 µm, or no greater than about 150 µm, or no greater than about 125 µm, or no greater than about 100 µm. The granular material may have a d₅₀ of from about 1 µm to about 500 µm, for example, from about 10 µm to about 400 µm, or from about 20 µm to about 300 µm, or from about 30 µm to about 250 µm, or from about 40 µm to about 200 µm, or from about 50 µm to about 150 µm.

Additionally or alternatively, the method may comprise crushing and/or grinding the precursor material prior to calcining. The method may comprise crushing and/or grinding the precursor material, prior to calcining, to a d₅₀ of no less than about 1 µm, for example, no less than about 10 µm, or no less than about 20 µm, or no less than about 30 µm, or no less than about 40 µm, or no less than about 50 µm, or no less than about 60 µm, or no less than about 70 µm, or no less than about 80 µm, or no less than about 90 µm, or no less than about 100 µm. The method may comprise crushing and/or grinding the precursor material, prior to calcining, to a d₅₀ of no greater than about 500 µm, for example, no greater than about 400 µm, or no greater than about 300 µm, or no greater than about 250 µm, or no greater than about 200 µm, or no greater than about 150 µm, or no greater than about 125 µm, or no greater than about 100 µm. The method may comprise crushing and/or grinding the precursor material, prior to calcining, to a d₅₀ of from about 1 µm to about 500 µm, for example, from about 10 µm to about 400 µm, or from about 20 µm to about 300 µm, or from about 30 µm to about 250 µm, or from about 40 µm to about 200 µm, or from about 50 µm to about 150 µm.

Unless otherwise stated, particle size properties referred to herein for particulate materials are as measured in a well-known manner by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer S (as supplied by Malvern instruments) provides measurements and a plot of the cumulative percentage by volume of particles having a size, referred to in the art as the "equivalent spherical diameter" (e.s.d), less than given e.s.d values. The mean particle size d₅₀ is the value determined in this way of the particle e.s.d. at which there are 50% by volume of the particles which have an equivalent spherical diameter less than that d₅₀ value.

### Calcined material

The calcined material may comprise no less than about 10 wt. %, for example, no less than about 20 wt. %, or no less than about 30 wt. %, or no less than about 40 wt. %, or no less than about 45 wt. %, of SiO₂. The calcined material may comprise no greater than about 80 wt. %, for example, no greater than about 70 wt. %, or no greater than about 60 wt. %, or no greater than about 55 wt. %, of SiO₂. The calcined material may comprise from about 10 wt. % to about 80 wt. %, for example, from about 20 wt. % to about 70 wt. %, or from about 30 wt. % to about 70 wt. %, or from about 40 wt. % to about 60 wt. %, or from about 45 wt. % to about 55 wt. %, of SiO₂.

The calcined material may comprise no less than about 10 wt. %, for example, no less than about 20 wt. %, or no less than about 30 wt. %, or no less than about 35 wt. %, or no less than about 40 wt. %, of CaO. The calcined material may comprise no greater than about 70 wt. %, for example, no greater than about 60 wt. %, or no greater than about 50 wt. %, or no greater than about 45 wt. %, of CaO. The calcined material may comprise from about 10 wt. % to about 70 wt. %, for example, from about 20 wt. % to about 60 wt. %, or from about 30 wt. % to about 50 wt. %, or from about 35 wt. % to about 50 wt. %, or from about 40 wt. % to about 45 wt. %, of CaO.

The calcined material may comprise no less than about 0.1 wt. %, for example, no less than about 0.5 wt. %, or no less than about 1.0 wt. %, of MgO. The calcined material may comprise no greater than about 5 wt. %, for example, no greater than about 4 wt. %, or no greater than about 3 wt. %, or no greater than about 2.5 wt. %, or no greater than about 2.0 wt. %, of MgO. The calcined material may comprise from about 0.1 wt. % to about 5 wt. %, for example, from about 0.5 wt. % to about 4 wt. %, or from about 0.5 wt. % to about 3 wt. %, or from about 0.5 wt. % to about 2.5 wt. %, or from about 1 wt. % to about 2.0 wt. %, of MgO.

The calcined material may comprise no less than about 0.1 wt. %, for example, no less than about 0.5 wt. %, of Al₂O₃. The calcined material may comprise no greater than about 5 wt. %, for example, no greater than about 4 wt. %, or no greater than about 3.5 wt. %, of Al₂O₃. The calcined material may comprise from about 0.1 wt. % to about 5 wt. %, for example, from about 0.5 wt. % to about 4 wt. %, or from about 0.5 wt. % to about 3.5 wt. %, of Al₂O₃.

The calcined material may comprise no less than about 0.001 wt. %, for example, no less than about 0.005 wt. %, of TiO₂. The calcined material may comprise no greater than about 3 wt. %, for example, no greater than about 1.5 wt. %, of TiO₂. The calcined material may comprise from about 0.001 wt. % to about 3 wt. %, for example, from about 0.005 wt. % to about 1.5 wt. %, of TiO₂.

The calcined material may comprise no less than about 0.01 wt. %, for example, no less than about 0.1 wt. %, of Fe₂O₃. The calcined material may comprise no greater than about 3 wt. %, for example, no greater than about 1.5 wt. %, or no greater than about 0.8 wt. %, of Fe₂O₃. The calcined material may comprise from about 0.01 wt. % to about 3 wt. %, for example, from about 0.1 wt. % to about 1.5 wt. %, or from about 0.1 wt. % to about 0.8 wt. %, of Fe₂O₃.

The calcined material may comprise no less than about 0.001 wt. %, for example, no less than about 0.01 wt. %, of MnO₂. The calcined material may comprise no greater than about 0.5 wt. %, for example, no greater than about 0.3 wt. %, or no greater than about 0.1 wt. %, of MnO₂. The calcined material may comprise from about 0.001 wt. % to about 0.5 wt. %, for example, from about 0.01 wt. % to about 0.3 wt. %, or from about 0.01 wt. % to about 0.1 wt. %, of MnO₂.

The calcined material may comprise no less than about 0.001 wt. %, for example, no less than about 0.005 wt. %, of Pb₂O₅. The calcined material may comprise no greater than about 0.5 wt. %, for example, no greater than about 0.3 wt. %, or no greater than about 0.1 wt. %, of Pb₂O₅. The calcined material may comprise from about 0.001 wt. % to about 0.5 wt. %, for example, from about 0.005 wt. % to about 0.3 wt. %, or from about 0.005 wt. % to about 0.1 wt. %, of Pb₂O₅.

The calcined material may comprise less than or equal to about 1 wt. %, for example, less than or equal to about 0.5 wt. %, or less than or equal to about 0.1 wt. %, or less than or equal to about 0.01 wt. %, or less than or equal to about 0.001 wt. %, of Na₂O. The calcined material may comprise no less than about 0.0001 wt. % of Na₂O. The calcined material may comprise from about 0.0001 wt. % to about 1 wt. %, for example, from about 0.0001 wt. % to about 0.5 wt. %, or from about 0.0001 wt. % to about 0.1 wt. %, or from about 0.0001 wt. % to about 0.01 wt. %, or from about 0.0001 wt. % to about 0.001 wt. %, of Na₂O. The calcined material may comprise substantially no Na₂O, i.e. the calcined material may be substantially Na₂O-free.

The calcined material may comprise no less than about 0.001 wt. %, for example, no less than about 0.01 wt. %, of K₂O. The calcined material may comprise no greater than about 0.5 wt. %, for example, no greater than about 0.3 wt. %, or no greater than about 0.1 wt. %, of K₂O. The calcined material may comprise from about 0.001 wt. % to about 0.5 wt. %, for example, from about 0.01 wt. % to about 0.3 wt. %, or from about 0.01 wt. % to about 0.1 wt. %, of K₂O.

The calcined material may comprise less than or equal to about 5 wt. %, for example, less than or equal to about 3 wt. %, or less than or equal to about 1 wt. %, or less than or equal to about 0.5 wt. %, of H₂O. The calcined material may comprise no less than about 0.001 wt. % of H₂O. The calcined material may comprise from about 0.001 wt. % to about 5 wt. %, for example, from about 0.001 wt. % to about 3 wt. %, or from about 0.001 wt. % to about 1 wt. %, or from about 0.001 wt. % to about 0.5 wt. %, of H₂O.

The calcined material may comprise: from about 10 wt. % to about 80 wt. %, for example, from about 20 wt. % to about 70 wt. %, or from about 30 wt. % to about 70 wt. %, or from about 40 wt. % to about 60 wt. %, or from about 45 wt. % to about 55 wt. %, of SiO₂; and from about 10 wt. % to about 70 wt. %, for example, from about 20 wt. % to about 60 wt. %, or from about 30 wt. % to about 50 wt. %, or from about 35 wt. % to about 50 wt. %, or from about 40 wt. % to about 45 wt. %, of CaO.

The calcined material may comprise: from about 10 wt. % to about 80 wt. %, for example, from about 20 wt. % to about 70 wt. %, or from about 30 wt. % to about 70 wt. %, or from about 40 wt. % to about 60 wt. %, or from about 45 wt. % to about 55 wt. %, of SiO₂; and from about 10 wt. % to about 70 wt. %, for example, from about 20 wt. % to about 60 wt. %, or from about 30 wt. % to about 50 wt. %, or from about 35 wt. % to about 50 wt. %, or from about 40 wt. % to about 45 wt. %, of CaO; and optionally: from about 0.1 wt. % to about 5 wt. %, for example, from about 0.5 wt. % to about 4 wt. %, or from about 0.5 wt. % to about 3 wt. %, or from about 0.5 wt. % to about 2.5 wt. %, or from about 1 wt. % to about 2.0 wt. %, of MgO; from about 0.1 wt. % to about 5 wt. %, for example, from about 0.5 wt. % to about 4 wt. %, or from about 0.5 wt. % to about 3.5 wt. %, of Al₂O₃; from about 0.001 wt. % to about 3 wt. %, for example, from about 0.005 wt. % to about 1.5 wt. %, of TiO₂; from about 0.01 wt. % to about 3 wt. %, for example, from about 0.1 wt. % to about 1.5 wt. %, or from about 0.1 wt. % to about 0.8 wt. %, of Fe₂O₃; from about 0.001 wt. % to about 0.5 wt. %, for example, from about 0.01 wt. % to about 0.3 wt. %, or from about 0.01 wt. % to about 0.1 wt. %, of MnO₂; from about 0.001 wt. % to about 0.5 wt. %, for example, from about 0.005 wt. % to about 0.3 wt. %, or from about 0.005 wt. % to about 0.1 wt. %, of Pb₂O₅; less than or equal to about 1 wt. %, for example, less than or equal to about 0.5 wt. %, or less than or equal to about 0.1 wt. %, or less than or equal to about 0.01 wt. %, or less than or equal to about 0.001 wt. %, of Na₂O; from about 0.001 wt. % to about 0.5 wt. %, for example, from about 0.01 wt. % to about 0.3 wt. %, or from about 0.01 wt. % to about 0.1 wt. %, of K₂O; and/or from about 0.001 wt. % to about 5 wt. %, for example, from about 0.001 wt. % to about 3 wt. %, or from about 0.001 wt. % to about 1 wt. %, or from about 0.001 wt. % to about 0.5 wt. %, of H₂O.

The calcined material may comprise: from about 10 wt. % to about 80 wt. %, for example, from about 20 wt. % to about 70 wt. %, or from about 30 wt. % to about 70 wt. %, or from about 40 wt. % to about 60 wt. %, or from about 45 wt. % to about 55 wt. %, of SiO₂; from about 10 wt. % to about 70 wt. %, for example, from about 20 wt. % to about 60 wt. %, or from about 30 wt. % to about 50 wt. %, or from about 35 wt. % to about 50 wt. %, or from about 40 wt. % to about 45 wt. %, of CaO; from about 0.1 wt. % to about 5 wt. %, for example, from about 0.5 wt. % to about 4 wt. %, or from about 0.5 wt. % to about 3 wt. %, or from about 0.5 wt. % to about 2.5 wt. %, or from about 1 wt. % to about 2.0 wt. %, of MgO; from about 0.1 wt. % to about 5 wt. %, for example, from about 0.5 wt. % to about 4 wt. %, or from about 0.5 wt. % to about 3.5 wt. %, of Al₂O₃; from about 0.001 wt. % to about 3 wt. %, for example, from about 0.005 wt. % to about 1.5 wt. %, of TiO₂; from about 0.01 wt. % to about 3 wt. %, for example, from about 0.1 wt. % to about 1.5 wt. %, or from about 0.1 wt. % to about 0.8 wt. %, of Fe₂O₃; from about 0.001 wt. % to about 0.5 wt. %, for example, from about 0.01 wt. % to about 0.3 wt. %, or from about 0.01 wt. % to about 0.1 wt. %, of MnO₂; from about 0.001 wt. % to about 0.5 wt. %, for example, from about 0.005 wt. % to about 0.3 wt. %, or from about 0.005 wt. % to about 0.1 wt. %, of Pb₂O₅; less than or equal to about 1 wt. %, for example, less than or equal to about 0.5 wt. %, or less than or equal to about 0.1 wt. %, or less than or equal to about 0.01 wt. %, or less than or equal to about 0.001 wt. %, of Na₂O; from about 0.001 wt. % to about 0.5 wt. %, for example, from about 0.01 wt. % to about 0.3 wt. %, or from about 0.01 wt. % to about 0.1 wt. %, of K₂O; and from about 0.001 wt. % to about 5 wt. %, for example, from about 0.001 wt. % to about 3 wt. %, or from about 0.001 wt. % to about 1 wt. %, or from about 0.001 wt. % to about 0.5 wt. %, of H₂O.

The calcined material may comprise calcium silicate (CaSiO₃), i.e. non-hydrated calcium silicate. The calcium silicate present in the calcined material may comprise (e.g. be) one or more calcium inosilicates, that is to say one or more forms of calcium silicate having a structure including interlocking chains of silicate tetrahedra. The calcium silicate present in the calcined material may comprise (e.g. be) calcium inosilicate in the form of wollastonite. The calcium silicate present in the calcined material may comprise (e.g. be) calcium silicate in the form of pseudowollastonite.

The calcined material may comprise predominantly calcium silicate (i.e. CaSiO₃, for example wollastonite and/or pseudowollastonite). The calcined material may comprise no less than about 50 wt. %, for example, no less than about 60 wt. %, or no less than about 70 wt. %, or no less than about 80 wt. %, or no less than about 90 wt. %, or no less than about 95 wt. %, of calcium silicate (i.e. CaSiO₃, for example wollastonite and/or pseudowollastonite). The calcined material may comprise no greater than about 99.9 wt. %, for example, no greater than about 99 wt. %, or no greater than about 95 wt. %, or no greater than about 90 wt. %, of calcium silicate (i.e. CaSiO₃, for example wollastonite and/or pseudowollastonite). The calcined material may comprise from about 50 wt. % to about 99.9 wt. %, for example, from about 60 wt. % to about 99 wt. %, or from about 70 wt. % to about 99 wt. %, or from about 80 wt. % to about 99 wt. %, or from about 90 wt. % to about 99 wt. %, or from about 60 wt. % to about 95 wt. %, or from about 70 wt. % to about 95 wt. %, or from about 80 wt. % to about 95 wt. %, or from about 90 wt. % to about 95 wt. %, or from about 60 wt. % to about 90 wt. %, or from about 70 wt. % to about 90 wt. %, or from about 80 wt. % to about 90 wt. %, of calcium silicate (i.e. CaSiO₃, for example wollastonite and/or pseudowollastonite).

The calcined material may comprise one or more mineral phases in addition to calcium silicate (i.e. CaSiO₃, for example wollastonite and/or pseudowollastonite). For example, the calcined material may further comprise silica (i.e. SiO₂), for example in the form of quartz (e.g. α-quartz or β-quartz), cristobalite, coesite, tridymite and/or stishovite. The calcined material may further comprise calcium oxide (i.e. CaO, otherwise known as quicklime) and/or calcium carbonate (i.e. CaCO₃, for example in the form of calcite, aragonite and/or vaterite) and/or calcium hydroxide (i.e. Ca(OH)₂, for example in the form of portlandite).

### Applications

The calcined material may be chemically (e.g. in terms of elemental composition and/or chemical bonding) and/or physically (e.g. in terms of structure or physical properties) similar to, or the same as, wollastonite (i.e. naturally occurring wollastonite). Accordingly, the calcined material may be a synthetic wollastonite substitute. The calcined material may be used to replace naturally occurring wollastonite in industrial applications. For example, the calcined material may be incorporated into ceramics, paints, plastics (i.e. polymer compositions) or metallurgical processing products such as a mould flux.

The mould flux may be a mould flux for use in metal casting. The mould flux may be a mould flux for use in steel casting (i.e. for use in the casting of steels).

The mould flux may consist of the calcined material (e.g. the synthetic wollastonite substitute). Alternatively, the mould flux may comprise the calcined material (e.g. the synthetic wollastonite substitute) and one or more flux agents other than the calcined material. For example, the mould flux may comprise (e.g. consist of) a mineral product, comprising the calcined material (i.e. the synthetic wollastonite substitute), and one or more flux agents other than the calcined material (e.g. the synthetic wollastonite substitute).

The method of manufacturing the mould flux may comprise: manufacturing the calcined material; and combining (e.g. mixing) the calcined material with one or more flux agents other than the calcined material. The method of manufacturing the mould flux may comprise: manufacturing the synthetic wollastonite substitute or the mineral product comprising the calcined material; and combining (e.g. mixing) the synthetic wollastonite substitute or the mineral product with one or more flux agents other than the calcined material.

The one or more flux agents other than the calcined material (e.g. other than the synthetic wollastonite substitute or the mineral product) may comprise one or more metal carbonates. For example, the one or more flux agents other than the calcined material (e.g. other than the synthetic wollastonite substitute or the mineral product) may comprise sodium carbonate or soda ash, calcium carbonate (such as calcite, aragonite or limestone), potassium carbonate, or lithium carbonate.

Additionally or alternatively, the one or more flux agents other than the calcined material (e.g. other than the synthetic wollastonite substitute or the mineral product) may comprise one or more metal fluorides. For example, the one or more flux agents other than the calcined material (e.g. other than the synthetic wollastonite substitute or the mineral product) may comprise sodium fluoride, calcium fluoride (such as fluorite or fluorspar), aluminium fluoride, potassium fluoride, lithium fluoride, or sodium aluminium hexafluoride (such as cryolite).

Additionally or alternatively, the one or more flux agents other than the calcined material (e.g. other than the synthetic wollastonite substitute or the mineral product) may comprise silica. For example, the one or more flux agents other than the calcined material (e.g. other than the synthetic wollastonite substitute or the mineral product) may comprise quartz (e.g. α-quartz or β-quartz).

Additionally or alternatively, the one or more flux agents other than the calcined material (e.g. other than the synthetic wollastonite substitute or the mineral product) may comprise one or more metal oxides. For example, the one or more flux agents other than the calcined material (e.g. other than the synthetic wollastonite substitute or the mineral product) may comprise magnesia (such as sintered magnesia).

Additionally or alternatively, the one or more flux agents other than the calcined material (e.g. other than the synthetic wollastonite substitute or the mineral product) one or more metal ores. For example, the one or more flux agents other than the calcined material (e.g. other than the synthetic wollastonite substitute or the mineral product) may comprise bauxite (such as calcined bauxite).

Additionally or alternatively, the one or more flux agents other than the calcined material (e.g. other than the synthetic wollastonite substitute or the mineral product) may comprise one or more clay minerals. For example, the one or more flux agents other than the calcined material (e.g. other than the synthetic wollastonite substitute or the mineral product) may comprise one or more clay phyllosilicate minerals (such as bentonite).

Additionally or alternatively, the one or more flux agents other than the calcined material (e.g. other than the synthetic wollastonite substitute or the mineral product) may comprise one or more metal silicates. For example, the one or more flux agents other than the calcined material (e.g. other than the synthetic wollastonite substitute or the mineral product) may comprise one or more feldspars (such as sodium feldspar).

Additionally or alternatively, the one or more flux agents other than the calcined material (e.g. other than the synthetic wollastonite substitute or the mineral product) may comprise blast furnace slag, for example ground-granulated blast furnace slag (GGBFS). Blast furnace slag may be obtained by quenching molten iron slag from a blast furnace in water or steam. Blast furnace slag is typically a glassy material. Blast furnace slag is also typically a low-cost material and has a similar lime-to-silica ratio as natural wollastonite, although blast furnace slag typically further contains impurities (such as alumina, iron oxide and/or magnesia) in higher amounts than natural wollastonite. It may be that use of the calcined material (e.g. the synthetic wollastonite substitute or the mineral product) enables incorporation of greater amounts of blast furnace slag without a degradation in flux properties, as the typically high purity of the calcined material compensates for the high levels of impurities in the blast furnace slag. In particular, replacement of natural wollastonite with the calcined material (i.e. the synthetic wollastonite substitute) may enable incorporation of greater amounts of blast furnace slag into the mould flux, reducing the overall cost.

Additionally or alternatively, the one or more flux agents other than the calcined material (e.g. other than the synthetic wollastonite substitute or the mineral product) may comprise one or more carbonaceous materials. For example, the one or more flux agents other than the calcined material (e.g. other than the synthetic wollastonite substitute or the mineral product) may comprise coal ash, fly ash and/or carbon black.

Additionally or alternatively, the one or more flux agents other than the calcined material (e.g. other than the synthetic wollastonite substitute or the mineral product) may comprise one or more boron-containing materials. For example, the one or more flux agents other than the calcined material (e.g. other than the synthetic wollastonite substitute or the mineral product) may comprise one or more borates (such as sodium tetraborate, available commercially as Dehybor® from Rio Tinto). The one or more flux agents other than the calcined material (e.g. other than the synthetic wollastonite substitute or the mineral product) may comprise vitribore, a waste product of glass manufacturing which typically comprises about 42 wt. % B₂O₃, about 33 wt. % SiO₂ and about 16 wt. % Na₂O, the balance being impurities, such as CaO or Pb₂O₅, and H₂O. The mould flux may further comprise one or more binding, wetting or dispersing additives.

An example of a binding additive is a phosphate, for example sodium polyphosphate (e.g. available as LITHOPIX® from Zschimmer & Schwartz).
Dispersing additives may comprise one or more polymers, copolymers or salts or esters thereof. For example, the dispersing additive may comprise a polycarboxylic acid polymer, a polyamine based polymer, a polymer or copolymer with acid groups, or an acrylate polymer or copolymer, or any combination thereof. The copolymer, when present, may be a block copolymer. Suitable salts and esters include alkylolammonium salt, ammonium salt, carboxylic acid ester and phosphoric acid ester. Example dispersing additives can be found in the DISPERBYK® line available from BYK-Chemie GmbH.

The mould flux may further comprise maize starch. Maize starch can assist in mould flux granule formation by improving bonding strength.

Accordingly, the mould flux may comprise, other than the calcined material, one or more flux agents selected from: metal carbonates, for example sodium carbonate or soda ash, calcium carbonate such as calcite, aragonite or limestone, potassium carbonate, or lithium carbonate; metal fluorides, for example sodium fluoride, calcium fluoride such as fluorite or fluorspar, aluminium fluoride, potassium fluoride, lithium fluoride, sodium aluminium hexafluoride such as cryolite; silica, for example quartz; metal oxides, for example magnesia such as sintered magnesia; metal ores, for example bauxite such as calcined bauxite; clay minerals, for example clay phyllosilicate minerals such as bentonite; metal silicates, for example feldspars such as sodium feldspar; blast furnace slag; and/or carbonaceous materials, such as coal ash, fly ash or carbon black; wherein the mould flux optionally further comprises one or more binding, wetting or dispersing additives.

The mould flux may comprise no less than about 10 wt. %, for example, no less than about 20 wt. %, or no less than about 30 wt. %, or no less than about 40 wt. %, or no less than about 50 wt. %, of the calcined material. The mould flux may comprise up to about 100 wt. %, for example, no more than about 90 wt. %, or no more than about 80 wt. %, or no more than about 70 wt. %, or no more than about 60 wt. %, or no more than about 55 wt. %, of the calcined material. The mould flux may comprise from about 10 wt. % to about 100 wt. %, for example, from about 20 wt. % to about 90 wt. %, or from about 30 wt. % to about 80 wt. %, or from about 40 wt. % to about 70 wt. %, or from about 50 wt. % to about 60 wt. %, or from about 50 wt. % to about 55 wt. %, of the calcined material.

The mould flux may comprise no less than about 10 wt. %, for example, no less than about 20 wt. %, or no less than about 30 wt. %, or no less than about 40 wt. %, or no less than about 50 wt. %, of the mineral product. The mould flux may comprise up to about 100 wt. %, for example, no more than about 90 wt. %, or no more than about 80 wt. %, or no more than about 70 wt. %, or no more than about 60 wt. %, or no more than about 55 wt. %, of the mineral product. The mould flux may comprise from about 10 wt. % to about 100 wt. %, for example, from about 20 wt. % to about 90 wt. %, or from about 30 wt. % to about 80 wt. %, or from about 40 wt. % to about 70 wt. %, or from about 50 wt. % to about 60 wt. %, or from about 50 wt. % to about 55 wt. %, of the mineral product.

The mineral product for the mould flux may comprise no less than about 10 wt. %, for example, no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, of the calcined material. The mineral product for the mould flux may comprise up to about 100 wt. %, for example, no more than about 90 wt. %, or no more than about 80 wt. %, or no more than about 70 wt. %, or no more than about 60 wt. %, of the calcined material. The mineral product for the mould flux may comprise from about 10 wt. % to about 100 wt. %, for example, from about 20 wt. % to about 100 wt. %, or from about 30 wt. % to about 100 wt. %, or from about 40 wt. % to about 100 wt. %, or from about 50 wt. % to about 100 wt. %, or from about 60 wt. % to about 100 wt. %, or from about 70 wt. % to about 100 wt. %, or from about 80 wt. % to about 100 wt. %, or from about 90 wt. % to about 100 wt. %, or from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 60 wt. % to about 90 wt. %, or from about 70 wt. % to about 90 wt. %, or from about 80 wt. % to about 90 wt. %, of the calcined material.

The method of manufacturing the mould flux may comprise mixing the calcined material (e.g. the synthetic wollastonite substitute or the mineral product), and optionally the one or more flux agents other than the calcined material, with a liquid. For example, the method of manufacturing the mould flux may comprise mixing the calcined material (e.g. the synthetic wollastonite substitute or the mineral product), and optionally the one or more flux agents other than the calcined material, with water. Accordingly, the method of manufacturing the mould flux may comprise: manufacturing a mould flux powder by combining (e.g. mixing) the calcined material (e.g. the synthetic wollastonite substitute or the mineral product) with one or more flux agents other than the calcined material; and subsequently combining (e.g. mixing) the mould flux powder with a liquid (e.g. water) to form a mould flux slurry.

Liquid (e.g. water) may be mixed with the calcined material (e.g. the synthetic wollastonite substitute or the mineral product), and optionally the one or more flux agents other than the calcined material, to target a predetermined mould flux flowability, for example measured using flow cups. The method may comprise adding no less than about 20 wt. %, for example, no less than about 30 wt. %, or no less than about 35 wt. %, or no less than about 40 wt. %, or no less than about 50 wt. %, or no less than about 60 wt. %, or no less than about 65 wt. %, of liquid, e.g. water, to the calcined material (e.g. the synthetic wollastonite substitute or the mineral product), and optionally the one or more flux agents other than the calcined material. The method may comprise adding no more than about 80 wt. %, for example, no more than about 70 wt. %, or no more than about 65 wt. %, or no more than about 50 wt. %, or no more than about 45 wt. %, or no more than about 40 wt. %, or no more than about 36 wt. %, of liquid, e.g. water, to the calcined material (e.g. the synthetic wollastonite substitute or the mineral product), and optionally the one or more flux agents other than the calcined material. The method may comprise adding from about 20 wt. % to about 80 wt. %, for example, from about 30 wt. % to about 70 wt. %, or from about 30 wt. % to about 50 wt. %, or from about 30 wt. % to about 40 wt. %, or from about 35 wt. % to about 40 wt. %, or from about 35 wt. % to about 36 wt. %, or from about 40 wt. % to about 80 wt. %, or from about 40 wt. % to about 70 wt. %, or from about 50 wt. % to about 70 wt. %, or from about 60 wt. % to about 70 wt. %, or from about 35 wt. % to about 45 wt. %, of liquid, e.g. water, to the calcined material (e.g. the synthetic wollastonite substitute or the mineral product), and optionally the one or more flux agents other than the calcined material.

The method of manufacturing the mould flux may comprise drying the mould flux slurry to form the mould flux. For example, the method of manufacturing the mould flux may comprise spray drying the mould flux slurry to form the mould flux. The presence of the calcined material (e.g. the synthetic wollastonite substitute or the mineral product) in the mould flux powder may enable mould flux slurry preparation with less water (as compared to mould flux powders formed from natural wollastonite), reducing energy consumption during spray drying.

The calcined material (e.g. the synthetic wollastonite substitute or the mineral product containing the calcined material) may have a bulk density, prior to the addition of liquid (e.g. water), of no less than about 0.05 g/cm³, for example, no less than about 0.1 g/cm³, or no less than about 0.12 g/cm³, or no less than about 0.14 g/cm³, or no less than about 0.2 g/cm³, or no less than about 0.4 g/cm³, or no less than about 0.6 g/cm³, or no less than about 0.8 g/cm³, or no less than about 0.9 g/cm³. The calcined material (e.g. the synthetic wollastonite substitute or the mineral product containing the calcined material) may have a bulk density, prior to the addition of liquid (e.g. water), of no greater than about 1.1 g/cm³, for example, no greater than about 1 g/cm³, or no greater than about 0.95g/cm³, or no greater than about 0.9 g/cm³, or no greater than about 0.8 g/cm³, or no greater than about 0.7 g/cm³, or no greater than about 0.6 g/cm³, or no greater than about 0.5 g/cm³, or no greater than about 0.4 g/cm³, or no greater than about 0.3 g/cm³, or no greater than about 0.2 g/cm³. The calcined material (e.g. the synthetic wollastonite substitute or the mineral product containing the calcined material) may have a bulk density, prior to the addition of liquid (e.g. water), of from about 0.05 g/cm³ to about 1.1 g/cm³, for example, from about 0.05 g/cm³ to about 0.4 g/cm³, or from about 0.05 g/cm³ to about 0.3 g/cm³, or from about 0.05 g/cm³ to about 0.2 g/cm³, or from about 0.1 g/cm³ to about 0.2 g/cm³, or from about 0.4 g/cm³ to about 0.6 g/cm³, or from about 0.7 g/cm³ to about 1.1 g/cm³, or from about 0.8 g/cm³ to about 1 g/cm³.

For the avoidance of doubt, the present application is directed to the subject-matter described in the following numbered paragraphs:
1. A method of manufacturing a mineral product for a mould flux for use in metal casting, the method comprising: providing a precursor material comprising hydrated calcium silicate; and calcining the precursor material at a temperature equal to or greater than about 800°C to produce a calcined material comprising calcium silicate.
2. A method of manufacturing a mould flux for use in metal casting, the method comprising: providing a precursor material comprising hydrated calcium silicate; and calcining the precursor material at a temperature equal to or greater than about 800°C to produce a calcined material comprising calcium silicate.
3. A method of manufacturing a synthetic wollastonite substitute, the method comprising: providing a precursor material comprising hydrated calcium silicate; and calcining the precursor material at a temperature equal to or greater than about 800°C to produce a calcined material comprising calcium silicate.
4. The method according to any one preceding paragraph, wherein the precursor material comprises hydrated calcium silicate in the form of tobermorite.
5. The method according to any one preceding paragraph, wherein the precursor material further comprises: calcium carbonate, for example in the form of calcite and/or vaterite; and/or silica, for example in the form of quartz.
6. The method according to any one preceding paragraph, wherein the precursor material is a thermally insulating and/or refractory material, for example a thermally insulating and/or refractory ceramic, optionally provided in the form of, or derived from, one or more thermally insulating and/or refractory bricks, for example, one or more reclaimed thermally insulating and/or refractory bricks.
7. The method according to any one preceding paragraph, wherein the method comprises: calcining the precursor material at a temperature equal to or greater than about 1000°C, or from about 800°C to about 1400°C, for example from about 1000°C to about 1300°C, or from about 1200°C to about 1250°C.
8. The method according to any one preceding paragraph, wherein calcining the precursor material at a temperature equal to or greater than about 800°C comprises: heating the precursor material to a first calcining temperature equal to or greater than about 800°C at a first heating rate; subsequently heating the precursor material to a second calcining temperature at a second heating rate, the second calcining temperature being higher than the first calcining temperature and the second heating rate being higher than the first heating rate; and subsequently cooling the calcined material to room temperature at a first cooling rate.
9. The method according to paragraph 8, wherein: the first calcining temperature is from about 800°C to about 900°C, for example about 800°C; the first heating rate is from about 60°C/hour to about 90°C/hour, for example from about 70°C/hour to about 80°C/hour; the second calcining temperature is from about 1100°C to about 1300°C, for example from about 1200°C to about 1250°C; the second heating rate is from about 90°C/hour to about 110°C/hour, for example about 100°C/hour; and/or the first cooling rate is from about 80°C/hour to about 170°C/hour, for example from about 100°C/hour to about 150°C/hour.
10. The method according to paragraph 8 or paragraph 9, wherein the method comprises: holding the precursor material at the second calcining temperature for at least about one hour, for example for about two hours.
11. The method according to any one preceding paragraph, wherein the method comprises: crushing and/or grinding the calcined material to produce a granular material having a d₅₀ from about 1 µm to about 250 µm, for example from about 50 µm to about 150 µm, wherein the crushing and/or grinding optionally takes place in a pulveriser, ball mill or hammer mill.
12. The method according to any one preceding paragraph, wherein, prior to calcining, the precursor material comprises: from about 30 wt. % to about 50 wt. % of SiO₂; and from about 25 wt. % to about 45 wt. % of CaO; and wherein the precursor material optionally further comprises: from about 0.5 wt. % to about 2 wt. % of MgO; from about 0.5 wt. % to about 3 wt. % of Al₂O₃; from about 0.005 wt. % to about 1.5 wt. % of TiO₂; from about 0.1 wt. % to about 1 wt. % of Fe₂O₃; from about 0.01 wt. % to about 0.1 wt. % of MnO₂; from about 0.005 wt. % to about 0.1 wt. % of P₂O₅; less than or equal to about 0.1 wt. % of Na₂O; from about 0.01 wt. % to about 0.1 wt. % of K₂O; and/or from about 1 wt. % to about 10 wt. % of H₂O.
13. The method according to any one preceding paragraph, wherein the calcined material comprises: from about 40 wt. % to about 60 wt. % of SiO₂; and from about 35 wt. % to about 50 wt. % of CaO; and wherein the calcined material optionally further comprises: from about 0.5 wt. % to about 2.5 wt. % of MgO, for example, from about 1.0 wt. % to about 2.0 wt. % of MgO; from about 0.5 wt. % to about 3.5 wt. % of Al₂O₃; from about 0.005 wt. % to about 1.5 wt. % of TiO₂; from about 0.1 wt. % to about 1.5 wt. % of Fe₂O₃, for example, from about 0.1 wt. % to about 0.8 wt. % of Fe₂O₃; from about 0.01 wt. % to about 0.1 wt. % of MnO₂, for example, from about 0.01 wt. % to about 0.1 wt. % of MnO₂; from about 0.005 wt. % to about 0.1 wt. % of P₂O₅; less than or equal to about 0.1 wt. % of Na₂O; from about 0.01 wt. % to about 0.1 wt. % of K₂O; and/or less than or equal to about 1 wt. % of H₂O.
14. A mineral product for a mould flux manufactured according to the method of paragraph 1 or any of paragraphs 4 to 13 dependent on paragraph 1.
15. A mould flux manufactured according to the method of paragraph 2 or any of paragraphs 4 to 13 dependent on paragraph 2.
16. The mould flux according to paragraph 15 further comprising one or more flux agents, other than the calcined material, selected from: metal carbonates, for example sodium carbonate or soda ash, calcium carbonate such as calcite, aragonite or limestone, potassium carbonate, or lithium carbonate; metal fluorides, for example sodium fluoride, calcium fluoride such as fluorite or fluorspar, aluminium fluoride, potassium fluoride, lithium fluoride, sodium aluminium hexafluoride such as cryolite; silica, for example quartz; metal oxides, for example magnesia such as sintered magnesia; metal ores, for example bauxite such as calcined bauxite; clay minerals, for example clay phyllosilicate minerals such as bentonite; metal silicates, for example feldspars such as sodium feldspar; blast furnace slag; and/or carbonaceous materials, such as coal ash, fly ash or carbon black; wherein the mould flux optionally further comprises one or more binding, wetting or dispersing additives.
17. A synthetic wollastonite substitute manufactured according to the method of paragraph 3 or any of paragraphs 4 to 13 dependent on paragraph 3.
18. Use of hydrated calcium silicate in the manufacture of a mould flux, or a mineral product for a mould flux, for use in metal casting.
19. Use of hydrated calcium silicate in the manufacture of a synthetic wollastonite substitute.
20 The use according to paragraph 18 or paragraph 19, wherein the hydrated calcium silicate is provided in the form of tobermorite.
21. The use according to any one or paragraphs 18 to 20, wherein the hydrated calcium silicate forms part of a thermally insulating and/or refractory material, for example a thermally insulating and/or refractory ceramic, for example in the form of one or more thermally insulating and/or refractory bricks, for example, one or more reclaimed thermally insulating and/or refractory bricks.

### EXAMPLES

### Example 1

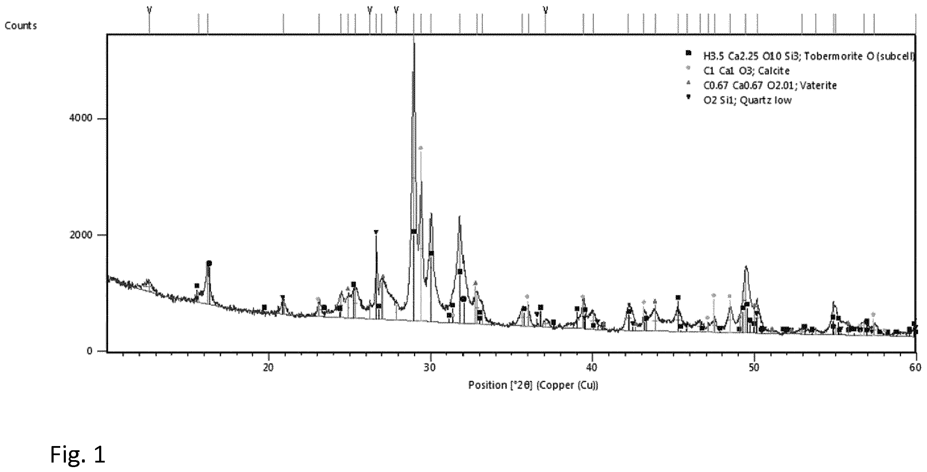

The composition of commercially available calcium silicate bricks of type A was examined using X-ray diffraction (XRD). The XRD pattern obtained for the bricks is shown in Figure 1. The presence of the following mineral phases was identified in the XRD pattern: tobermorite, calcite, vaterite and quartz. The relative amount of each phase present, as estimated using the reference intensity ratio (RIR) method, is shown in Table 1. Tobermorite was found to be the predominant phase present.

**Table 1.**

| | |
|---|---|
| Tobermorite (RIR* - 3.07) | 71 % |
| Calcite (RIR* - 3.40) | 14 % |
| Vaterite (RIR* - 1.35) | 8 % |
| Quartz (RIR* - 3.22) | 7 % |

| | |
|---|---|
| *Reference Intensity Ratio | |

Thermogravimetric analysis of the calcium silicate bricks of type A was carried out up to a temperature of 1100°C using a NETZSCH STA 409 PC/PG instrument. A weight loss of about 25 % was observed while heating from room temperature up to about 800°C. However, no significant weight loss was measured while heating from about 800°C to 1100°C. These results are interpreted as indicating weight loss associated with dehydration of tobermorite up to 800°C, followed by transformation of dehydrated tobermorite to wollastonite above 800°C.

Calcium silicate bricks of type A were calcined in a kiln at (a) 1000°C or (b) 1200°C for three hours. Table 2 shows the composition of a calcium silicate brick material A prior to calcination and following calcination. Table 2 also shows, for comparison, the composition of two different commercially available wollastonite powders A and B.

**Table 2.**

| | **Brick type A** | **Following calcination at 1000°C for 3 hours** | **Following calcination at 1200°C for 3 hours** | **Wollastonite A** | **Wollastonite B** |
|---|---|---|---|---|---|
| **SiO₂ wt.%** | 39.62 | 49.59 | 50.09 | 45.73 | 48.00 |
| **CaO wt.%** | 34.06 | 42.30 | 43.32 | 40.04 | 43.07 |
| **MgO wt.%** | 1.16 | 1.54 | 1.36 | 0.52 | 0.17 |
| **Al₂O₃ wt.%** | 1.76 | 2.38 | 1.96 | 1.24 | 0.40 |
| **TiO₂ wt.%** | 0.07 | 0.01 | 0.08 | 0.04 | 0.00 |
| **Fe₂O₃ wt.%** | 0.38 | 0.49 | 0.63 | 3.09 | 1.10 |
| **MnO₂ wt.%** | 0.04 | 0.05 | 0.04 | 0.43 | 0.37 |
| **P₂O₅ wt.%** | 0.02 | 0.02 | 0.02 | 0.06 | 0.01 |
| **Na₂O wt.%** | 0.00 | 0.00 | 0.00 | 0.00 | 0.00 |
| **K₂O wt.%** | 0.04 | 0.06 | 0.05 | 0.07 | 0.06 |
| **Moisture wt.%** | 6.00 | 0.37 | 0.12 | 0.35 | 0.25 |
| **C wt.%** | 4.30 | 0.05 | 0.03 | 1.50 | 0.95 |
| **Bulk Density (g/cm³)** | 0.11 | 0.14 | 0.90 | 0.60 | 0.53 |
| **L.O.I. wt.%** | 22.93 | 3.23 | 2.38 | 8.20 | 6.50 |

It can be seen from Table 2 that the composition of the material following calcination is similar to that of the commercially available wollastonite, particularly in terms of the amount of SiO₂ and CaO present.

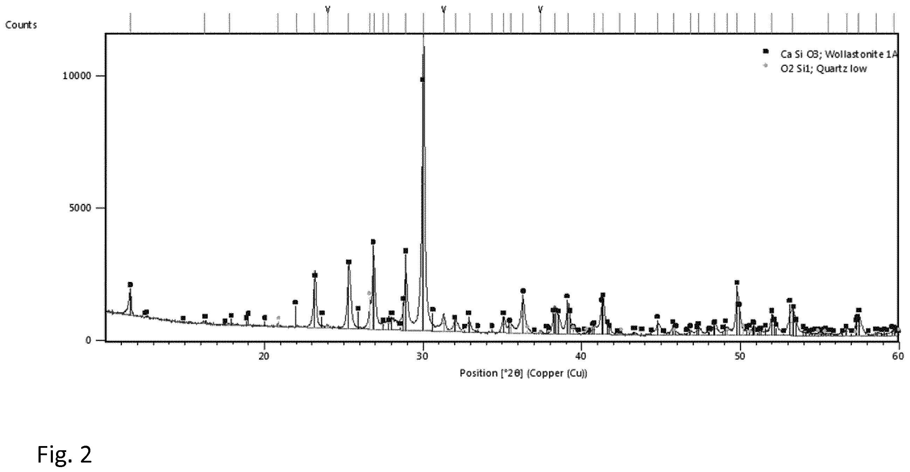

The XRD pattern obtained for the material following calcination at 1200°C is shown in Figure 2. The presence of the following mineral phases was identified in the XRD pattern: wollastonite and quartz. The relative amount of each phase present, as estimated using the reference intensity ratio (RIR) method, is shown in Table 3. Wollastonite was found to be the predominant phase present.

**Table 3.**

| | |
|---|---|
| Wollastonite (RIR* - 0.91) | 96 % |
| Quartz (RIR* - 3.23) | 4 % |

| | |
|---|---|
| *Reference Intensity Ratio | |

The bulk density of the material following calcination at 1000°C is substantially lower than the bulk density of commercially available wollastonite powder. It was found that the addition of more water (about 65 wt. % for the calcined calcium silicate brick material compared to about 40 wt. % for wollastonite type B) was required to achieve a slurry having the same flowability.

In contrast, the bulk density of the material following calcination at 1200°C is substantially higher than the bulk density of commercially available wollastonite powder. It was found that the addition of less water (about 35 wt. % for the calcined calcium silicate brick material compared to about 40 wt. % for wollastonite type B) was required to achieve a slurry having the same flowability.

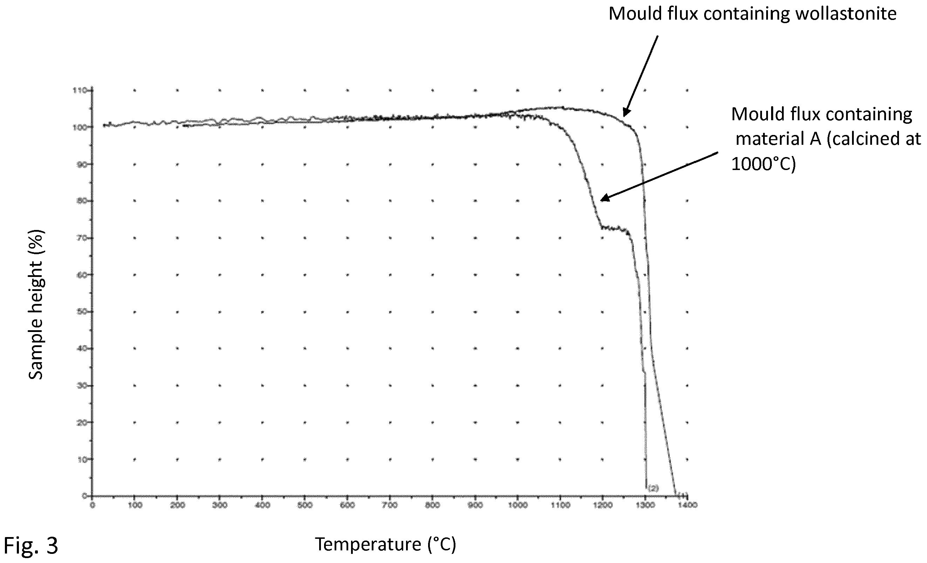

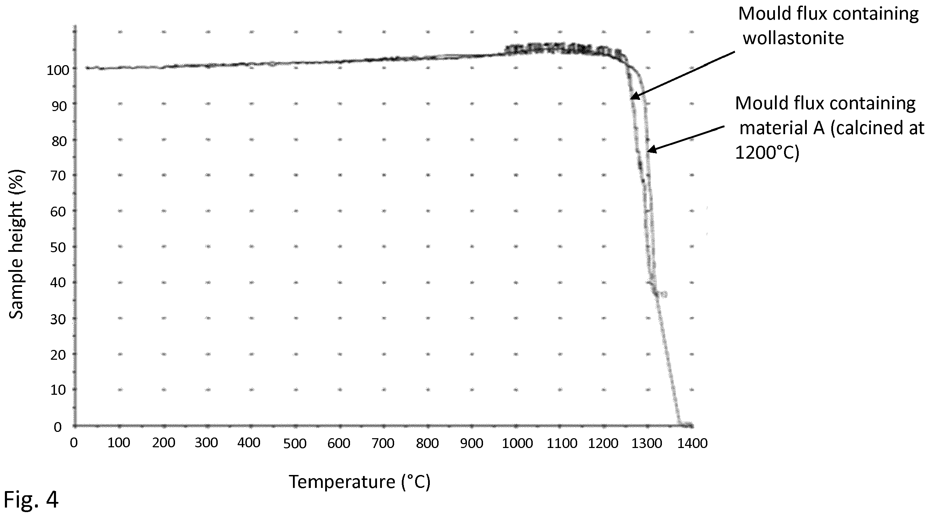

Figures 3 and 4 compare the high temperature behavior of a mould flux containing wollastonite with a mould flux in which the wollastonite was replaced by the calcium silicate brick material A following calcination at 1000°C (Figure 3) or 1200°C (Figure 4). Figures 3 and 4 were prepared by monitoring cylindrical (3 mm in height and 1 mm in diameter) moulded samples of the fluxes in a hot stage microscope (HSM) and recording the height of each sample as a function of temperature during heating. A reduction in height indicates a phase transformation such as melting. The high temperature behavior appears to be substantially the same when wollastonite is replaced by the calcium silicate brick material calcined at 1200°C. The high temperature behavior is also substantially the same when wollastonite is replaced by the calcium silicate brick material calcined at 1000°C.

### Example 2

The composition of reclaimed calcium silicate bricks of type B was examined using X-ray diffraction (XRD). The presence of the following mineral phases was identified: tobermorite, wollastonite, calcite and quartz. Wollastonite, tobermorite and calcite were found to be the predominant phases present.

Reclaimed calcium silicate bricks of type B were calcined in a kiln at 1200°C for two hours. Table 4 shows the composition of the calcium silicate brick material B following calcination. Table 4 also shows, for comparison, the composition of the two different commercially available wollastonite powders A and B.

**Table 4.**

| | **Brick type B following calcination at 1200°C for 2 hours** | **Wollastonite A** | **Wollastonite B** |
|---|---|---|---|
| **SiO₂ wt.%** | 53.04 | 45.73 | 48.00 |
| **CaO wt.%** | 41.90 | 40.04 | 43.07 |
| **MgO wt.%** | 0.79 | 0.52 | 0.17 |
| **Al₂O₃wt.%** | 0.90 | 1.24 | 0.40 |
| **TiO₂wt-%** | 0.03 | 0.04 | 0.00 |
| **Fe₂O₃ wt.%** | 0.36 | 3.09 | 1.10 |
| **MnO₂ wt.%** | 0.06 | 0.43 | 0.37 |
| **P₂O₅ wt.%** | 0.01 | 0.06 | 0.01 |
| **Na₂O wt.%** | 0.01 | 0.00 | 0.00 |
| **K₂O wt.%** | 0.06 | 0.07 | 0.06 |
| **Moisture wt.%** | 0.11 | 0.35 | 0.25 |
| **C wt.%** | 0.02 | 1.50 | 0.95 |
| **Bulk Density (g/cm³)** | 0.70 | 0.60 | 0.53 |
| **L.O.I. wt.%** | 2.49 | 8.20 | 6.50 |

The bulk density of the material following calcination at 1200°C is higher than the bulk density of commercially available wollastonite powder. It was found that the addition of less water (about 38 wt. % for the calcined calcium silicate brick material compared to about 40 wt. % for wollastonite type B) was required to achieve a slurry having the same flowability.

It was found that a satisfactory mould flux powder for metal casting could be prepared by combining the calcined calcium silicate brick material with typical mould flux agents such as sodium feldspar and/or fluorspar.

## Claims

1. A method of manufacturing a mineral product for a mould flux for use in metal casting, the method comprising:
providing a precursor material comprising hydrated calcium silicate; and
calcining the precursor material at a temperature equal to or greater than about 800°C to produce a calcined material comprising calcium silicate.

2. A method of manufacturing a mould flux for use in metal casting, the method comprising:
providing a precursor material comprising hydrated calcium silicate; and
calcining the precursor material at a temperature equal to or greater than about 800°C to produce a calcined material comprising calcium silicate.

3. A method of manufacturing a synthetic wollastonite substitute, the method comprising:
providing a precursor material comprising hydrated calcium silicate; and
calcining the precursor material at a temperature equal to or greater than about 800°C to produce a calcined material comprising calcium silicate.

4. The method according to any one preceding claim, wherein the precursor material comprises hydrated calcium silicate in the form of tobermorite, and optionally wherein the precursor material further comprises:
calcium carbonate, for example in the form of calcite and/or vaterite; and/or
silica, for example in the form of quartz.

5. The method according to any one preceding claim, wherein the precursor material is a thermally insulating and/or refractory material, for example a thermally insulating and/or refractory ceramic, optionally provided in the form of, or derived from, one or more thermally insulating and/or refractory bricks, for example, one or more reclaimed thermally insulating and/or refractory bricks.

6. The method according to any one preceding claim, wherein the method comprises:
calcining the precursor material at a temperature equal to or greater than about 1000°C, or from about 800°C to about 1400°C, for example from about 1000°C to about 1300°C, or from about 1200°C to about 1250°C.

7. The method according to any one preceding claim, wherein calcining the precursor material at a temperature equal to or greater than about 800°C comprises:
heating the precursor material to a first calcining temperature equal to or greater than about 800°C at a first heating rate;
subsequently heating the precursor material to a second calcining temperature at a second heating rate, the second calcining temperature being higher than the first calcining temperature and the second heating rate being higher than the first heating rate; and
subsequently cooling the calcined material to room temperature at a first cooling rate;
optionally wherein:
the first calcining temperature is from about 800°C to about 900°C, for example about 800°C;
the first heating rate is from about 60°C/hour to about 90°C/hour, for example from about 70°C/hour to about 80°C/hour;
the second calcining temperature is from about 1100°C to about 1300°C, for example from about 1200°C to about 1250°C;
the second heating rate is from about 90°C/hour to about 110°C/hour, for example about 100°C/hour; and/or
the first cooling rate is from about 80°C/hour to about 170°C/hour, for example from about 100°C/hour to about 150°C/hour;
and further optionally wherein the method comprises:
holding the precursor material at the second calcining temperature for at least about one hour, for example for about two hours.

8. The method according to any one preceding claim, wherein the method comprises:
crushing and/or grinding the precursor material or the calcined material to produce a granular material having a d₅₀ from about 1 µm to about 250 µm, for example from about 50 µm to about 150 µm, wherein the crushing and/or grinding optionally takes place in a pulveriser, ball mill or hammer mill.

9. The method according to any one preceding claim, wherein, prior to calcining, the precursor material comprises:
from about 30 wt. % to about 50 wt. % of SiO₂; and
from about 25 wt. % to about 45 wt. % of CaO;
and wherein the precursor material optionally further comprises:
from about 0.5 wt. % to about 2 wt. % of MgO;
from about 0.5 wt. % to about 3 wt. % of Al₂O₃;
from about 0.005 wt. % to about 1.5 wt. % of TiO₂;
from about 0.1 wt. % to about 1 wt. % of Fe₂O₃;
from about 0.01 wt. % to about 0.1 wt. % of MnO₂;
from about 0.005 wt. % to about 0.1 wt. % of P₂O₅;
less than or equal to about 0.1 wt. % of Na₂O;
from about 0.01 wt. % to about 0.1 wt. % of K₂O; and/or
from about 1 wt. % to about 10 wt. % of H₂O.

10. The method according to any one preceding claim, wherein the calcined material comprises:
from about 40 wt. % to about 60 wt. % of SiO₂; and
from about 35 wt. % to about 50 wt. % of CaO;
and wherein the calcined material optionally further comprises:
from about 0.5 wt. % to about 2.5 wt. % of MgO, for example, from about 1.0 wt. % to about 2.0 wt. % of MgO;
from about 0.5 wt. % to about 3.5 wt. % of Al₂O₃;
from about 0.005 wt. % to about 1.5 wt. % of TiO₂;
from about 0.1 wt. % to about 1.5 wt. % of Fe₂O₃, for example, from about 0.1 wt. % to about 0.8 wt. % of Fe₂O₃;
from about 0.01 wt. % to about 0.1 wt. % of MnO₂, for example, from about 0.01 wt. % to about 0.1 wt. % of MnO₂;
from about 0.005 wt. % to about 0.1 wt. % of P₂O₅;
less than or equal to about 0.1 wt. % of Na₂O;
from about 0.01 wt. % to about 0.1 wt. % of K₂O; and/or
less than or equal to about 1 wt. % of H₂O.

11. A mineral product for a mould flux manufactured according to the method of claim 1 or any of claims 4 to 10 dependent on claim 1.

12. A mould flux manufactured according to the method of claim 2 or any of claims 4 to 10 dependent on claim 2, the mould flux optionally further comprising one or more flux agents, other than the calcined material, selected from:
metal carbonates, for example sodium carbonate or soda ash, calcium carbonate such as calcite, aragonite or limestone, potassium carbonate, or lithium carbonate;
metal fluorides, for example sodium fluoride, calcium fluoride such as fluorite or fluorspar, aluminium fluoride, potassium fluoride, lithium fluoride, sodium aluminium hexafluoride such as cryolite;
silica, for example quartz;
metal oxides, for example magnesia such as sintered magnesia;
metal ores, for example bauxite such as calcined bauxite;
clay minerals, for example clay phyllosilicate minerals such as bentonite;
metal silicates, for example feldspars such as sodium feldspar; and/or
carbonaceous materials, such as coal ash, fly ash or carbon black;
wherein the mould flux optionally further comprises one or more binding, wetting or dispersing additives.

13. A synthetic wollastonite substitute manufactured according to the method of claim 3 or any of claims 4 to 10 dependent on claim 3.

14. Use of hydrated calcium silicate in: (a) the manufacture of a mould flux, or a mineral product for a mould flux, for use in metal casting; or (b) the manufacture of a synthetic wollastonite substitute;
wherein the hydrated calcium silicate is optionally provided in the form of tobermorite.

15. The use according to claim 15, wherein the hydrated calcium silicate forms part of a thermally insulating and/or refractory material, for example a thermally insulating and/or refractory ceramic, for example in the form of one or more thermally insulating and/or refractory bricks, for example, one or more reclaimed thermally insulating and/or refractory bricks.
